(19) **Europäisches Patentamt / European Patent Office / Office européen des brevets**

(11) **EP 4 560 263 B1**

(12) **EUROPEAN PATENT SPECIFICATION**

(45) Date of publication and mention
of the grant of the patent:
**03.06.2026  Bulletin 2026/23**

(21) Application number: **23211993.3**

(22) Date of filing: **24.11.2023**

(51) International Patent Classification (IPC):
**G01C 21/20** (2006.01)     **G08G 3/02** (2006.01)

(52) Cooperative Patent Classification (CPC):
**G01C 21/203; G08G 3/02**

(54) **NAVIGATION PLANNING SYSTEM AND NAVIGATION PLANNING METHOD**

NAVIGATIONSPLANUNGSSYSTEM UND NAVIGATIONSPLANUNGSVERFAHREN

SYSTÈME ET PROCÉDÉ DE PLANIFICATION DE NAVIGATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.05.2025  Bulletin 2025/22**

(73) Proprietor: **FURUNO ELECTRIC CO., LTD.**
**Nishinomiya-City, Hyogo 662-8580 (JP)**

(72) Inventor: **UOSHITA, Seiichi**
**Nishinomiya-City, 662-8580 (JP)**

(74) Representative: **Müller Hoffmann & Partner**
**Patentanwälte mbB**
**St.-Martin-Straße 58**
**81541 München (DE)**

(56) References cited:
**EP-A1- 4 290 496     WO-A1-2019/121237**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates mainly to a vessel navigation system for safely navigating a vessel, and more specifically to a navigation planning system and a navigation planning method for safely navigating a vessel by avoiding collision with a plurality of obstacles around the vessel.

### BACKGROUND

Generally, a vessel or other movable body sets a starting point or a planned route of a voyage from a starting point to a destination point before beginning the voyage. Currently, the movable body such as the vessel may have navigation systems and devices to set the planned route and monitor the planned route in order to navigate the movable body safely.

In these conventional navigation planning systems, in order to avoid collision with other obstacles such as the other vessels, a plurality of sensor units is used to identify movable body information including a position of the movable body itself such as the vessel and a position of the obstacle or other vessels near the vessel which would cross the planned route of the vessel.

### Prior Art

### Patent Document

[Patent Document 1] US2020/0310434

WO 2019/ 121237 A1 discloses a collision avoidance system and method for a water-based vessel. The method comprises: obtaining real-time data relating to the path of two or more vessels; identifying a collision risk between the two or more vessels; determining if the collision risk is above a predetermined threshold, wherein when the collision risk is above the predetermined threshold, determining one or more collision avoidance manoeuvres on the basis of historical navigation data which correspond to the real-time data; providing the one or more collision avoidance manoeuvres to an operator of the one or more vessels.

EP 4 290 496 A1, as published after the present priority date, teaches a navigation route planning apparatus that comprises a planned route receiving module configured to receive a planned route which indicates a route of a movable body and a current course direction from a current position of the movable body; a movable body information acquiring module configured to receive movable body information that includes at least one of a position, a travelling direction, and a speed of the movable body; an obstacle information acquiring module configured to receive obstacle information that includes at least one of a position, a travelling direction, and a speed of an obstacle; a collision risk calculator configured to determine a collision risk value associated with the planned route along the current course direction based on the movable body information and the obstacle information; and a collision risk evaluator configured to determine whether the movable body requires to at least one of: evade the planned route and continue traversing on the planned route based on the collision risk value associated with the planned route.

### SUMMARY

### Problems to be solved by the invention

By the way, while navigating a planned route may have to be changed due to artificial factors such as an appearance of obstacles or other vessels in a vicinity that may cross the planned route. Natural factors, such as sudden changes in ocean conditions, tides, and other disturbance factors, may force a change of route from the planned route.

For this reason, a vessel operator must safely navigate the movable body, such as their vessel, along the planned route, avoiding collisions with the surrounding obstacles and the other vessels, and may need assistance navigating ocean conditions and tides. To meet the above requirements, systems, devices, and methods are provided to assist vessel operators in safely navigating the movable body by establishing an evasion route that avoids collisions with the obstacles and the other vessels.

However, in order to enable the vessel operator to safely navigate the vessel, to the vessel operator needs to be able to verify that the evasion route being established and attempting to change routes has a reduced collision risk compared to the planned route. The vessel operator needs to be further desirable to be able to compare a route length of the planned route with that of the evasion route, and to be able to more flexibly choose whether to adopt the evasion operation or not.

**Means for Solving Problems**

The above problems are solved by the subject-matter of the independent claims.

A navigation planning system according to the present invention has been developed to solve the above problems. The navigation planning system comprises a navigation planning route acquiring module for acquiring planned route information indicating a planned route of a movable body moving on a water. Further, the navigation planning system comprises a movable body information acquiring module for acquiring movable body information including a position and a moving direction of the movable body. Furthermore, the navigation planning system comprises an obstacle information acquiring module for acquiring obstacle information including a position and a moving direction for each of a plurality of the obstacles located around the movable body.

The navigation planning system further comprises an evasion route setting module for setting an evasion route, different from the planned route, comprising a starting point located on the planned route. Further, the navigation planning system comprises a collision risk calculator for calculating a collision risk indicating a risk level of collision between the movable body and the obstacle based on the movable body information and obstacle information. Finally, the navigation planning system comprises a risk evaluator for evaluating a risk.

The risk evaluator obtains a maximum evasion route collision risk when the movable body travels on the evasion route and a maximum planned route collision risk when the movable body travels on the planned route, calculated by the collision risk calculator respectively. Further, the risk evaluator compares the maximum evasion route collision risk with the maximum planned route collision risk. Furthermore, the risk evaluator outputs a navigation route change signal indicating that the movable body change the planned route to the evasion route when the maximum evasion route collision risk is less than the maximum planned route collision risk.

In the navigation planning system, the evasion route setting module sets the evasion route different from the planning route for a part of or an entire unnavigated route of the planning route when the risk evaluator determines the necessity of the evasion route.

In the navigation planning system, the evasion route setting module further includes a potential evasion route generator configured to generate a plurality of potential evasion routes different from the planned route between an evasion starting point and a return point on the unnavigated route. Further, the risk evaluator selects the evasion route among the potential evasion routes.

In the navigation planning system, the collision risk calculator calculates the maximum evasion route collision risk when the movable body travel along the evasion route from the evasion starting point to the return point. Further, the risk evaluator selects the potential evasion route, as the evasion route, having the maximum evasion route collision risk is the minimum among the plurality of potential evasion routes.

In one embodiment, the evasion starting point may be a current navigational position of the movable body moving on or along the planned route. In another embodiment, the evasion starting point may be any position on the unnavigated route on the planned route. In yet another embodiment, the evasion starting point may be a future position of the movable body calculated from the current navigational position of the movable body moving along the planned route.

The navigation planning system of the present invention further comprises a distance calculator for calculating a planned route distance when the movable body travels on the planned route starting at the evasion starting point for a predetermined time, and a evasion route distance when the movable body travels on the evasion route starting at the evasion starting point for a predetermined time, respectively. The risk evaluator may further determine whether to output the navigation route change signal based on the comparison result of the planned route distance and the evasion route distance .

In the navigation planning system, the risk evaluator further calculates a difference between the planned route distance and the evasion route distance , and output the navigation route change signal when the difference is equal to or less than a predetermined value, or calculate the distance ratio based on the evasion route distance to the planned route distance , and output the navigation route change signal when the distance ratio is equal to or less than a predetermined value.

In the navigation planning system, the risk evaluator further outputs the navigation route change signal when a difference between the maximum planned route collision risk and the maximum evasion route collision risk is greater than a predetermined value . The risk evaluator further determines whether to output the navigation route change signal based on the planned route distance and the evasion route distance when the difference between the maximum planned route collision risk and the maximum evasion route collision risk is within the predetermined value.

The movable body information may further include information corresponding to the speed of the movable body, and the obstacle information may further include information corresponding to the speed of the obstacle. The speed of the movable body may be appropriately calculated from changes in the position and direction of movement of the movable body.

The navigation planning system of the present invention further comprises a congestion risk calculator for calculating a congestion risk indicating a degree of simultaneous proximity of a plurality of obstacles on the collision risk corresponding to each of the obstacle.

In the navigation planning system, a congestion risk comparator compares a maximum evasion congestion risk between the evasion starting point on the evasion route and the return point with the maximum planned route congestion risk between the evasion starting point and the return point on the planned route calculated by the congestion risk calculator.

In this navigation planning system, the risk evaluator instructs to change the navigation route to the evasion route when the maximum evasion route collision risk is less than the maximum planned route collision risk , and the maximum evasion route congestion risk is less than the maximum planned route congestion risk.

The navigation planning system of the present invention further includes a distance calculator for calculating the planned route distance when the movable body navigates on the planned route starting from the evasion starting point for the predetermined time, and the evasion route distance when the movable body navigates on the evasion route starting from the evasion starting point for the predetermined time, respectively. The risk evaluator further determines the necessity of the navigation route change signal based on the comparison of the planned route distance and the evasion route distance.

In the navigation planning system, the distance calculator calculates the planned route distance between the evasion starting point and the return point on the planned route when the movable body travels on the planned route, and the evasion route distance between evasion starting point and the return point when the movable body travels on the evasion route, respectively. The risk evaluator may determine whether to output the navigation route change signal based on the comparison of the planned route distance and the evasion route distance.

In the navigation planning system, the risk evaluator obtains the planned route distance and the evasion route distance, and outputs the navigation route change signal when the difference is equal to or less than a predetermined value. The risk evaluator further calculates the distance ratio of the evasion route distance and the planned route distance, and outputs the navigation route change signal when the distance ratio is equal to or less than a predetermined value.

In the navigation planning system, the risk evaluator outputs the navigation route change signal when the maximum collision risk is equal to or less than a predetermined value. Further, the risk evaluator determines whether to output the navigation route change signal based on the planned route distance and the evasion route distance when the maximum collision risk is within a predetermined base a second large range.

The navigation planning system of the present invention further include a congestion risk calculator for calculating a maximum planned route congestion risk. The planned route congestion risk is calculated based on a value of a logical sum of a plurality of the collision risks including the maximum collision risk among the plurality of the collision risks. Alternatively, the congestion risk calculator calculates the planned route congestion risk based on the value of the logical sum of the plurality of the collision risks excluding the maximum collision risk among the plurality of the collision risks.

In the navigation planning system, the congestion risk calculator calculates the congestion risk based on the collision risk corresponding to the selected plurality of the obstacles among the plurality of the obstacles corresponding to the obstacle information acquired by the obstacle information acquiring module. The congestion risk calculator may be adapted to calculate the congestion risk based on the collision risk corresponding to each of the obstacles in a group of a second large maximum collision risk including the obstacle corresponding to the second large maximum collision risk of the collision risk next to the maximum collision risk and the obstacle having the collision risk less than the second large maximum collision risk. Further, the congestion risk calculator may be adapted to calculate a planned route congestion risk and an evasion route congestion risk based on the values of the logical sum of the collision risks.

In the navigation planning system of the present invention, the collision risk calculator may be adapted to calculate the maximum collision risk when the movable body navigates on each potential evasion route from a plurality of potential evasion routes, and the evasion route selection unit may select the potential evasion route as the evasion route based on the maximum collision risk.

Further, in the above configuration, the congestion risk calculator may be adapted to calculate the congestion risk for each of the potential evasion routes. Further, the evasion route acquisition unit may be adapted to set the evasion route based on the maximum of the collision risk and the congestion risk.

Further, the obstacle information may include one of information detected by a radar, a lidar, a sonar, and image sensors mounted on the movable body, information received by an automatic identification system receiver, information transmitted by the other vessels other than the movable body, and information detected by a wireless communication at a location other than the movable body. The obstacle information may further include information related to other objects, including at least one of the other vessels, currents, weather, reefs, or stranded vessels.

The navigation planning system of the present invention includes a display for displaying the evasion route together with the planned route on a display image. The navigation planning system further includes a route planning unit for providing one or more routes for the navigation of the movable body from the starting point to a destination point, and a sensor unit for obtaining fault information.

In the navigation planning system of the present invention, the evasion route acquiring unit acquires one of the evasion route information generated outside the movable body via the wireless communication such as a satellite communication, and information related to the evasion route set in the evasion route setting module. The evasion route setting module is provided with a potential evasion route generator for generating the potential evasion route from the plurality of the evasion routes of a route different from the planned route between the evasion starting point and the return point on the planned route, and an evasion route selection part for selecting the evasion route from the plurality of potential evasion routes.

The evasion route setting module may be provided with a display for displaying a chart navigated by the movable body and a user interface for receiving a route set by a user from the chart displayed on the display, so as to obtain the information of the evasion route set.

In one embodiment, a navigation planning method of the present invention is a method for planning a route from a departure place to the destination point. The method comprises acquiring a planned route for a movable body on a water. Further, the method comprises acquiring movable body information including a position, a moving direction, and a speed of the movable body. Further, the method comprises acquiring obstacle information including a position, a moving direction, and a speed of an obstacle located in a surrounding area of the movable body. Furthermore, the method comprises acquiring an evasion route comprising the starting point is located on the planned route, different from the planned route. Subsequently, the method comprises calculating a collision risk indicating a risk level of collision between the movable body and the obstacle based on the movable body information and obstacle information.

The navigation planning method further comprises obtaining a maximum evasion route collision risk when the movable body travels on the evasion route and a maximum planned route collision risk when the movable body travels on the planned route, calculated by the collision risk calculator respectively. Further, the method comprises comparing the maximum evasion route collision risk with the maximum planned route collision risk. Furthermore, the method outputs a navigation route change signal indicating that the movable body change the planned route to the evasion route when the maximum evasion route collision risk is less than the maximum planned route collision risk.

The navigation planning method further comprises generating a plurality of potential evasion routes different from the planned route between an evasion starting point and a return point on an unnavigated route. The method comprises selecting the evasion route among the plurality of potential evasion routes. The method further comprises calculating the maximum collision risk when the movable body travel along the evasion route from the evasion starting point to the return point, and selecting the potential evasion route, as the evasion route, whose maximum collision risk is the minimum among the plurality of potential evasion routes.

The navigation planning method further includes calculating a congestion risk indicating a degree of approaching a plurality of obstacles simultaneously based on each of the collision risk between the movable body and the obstacle. Further, the method includes obtaining a maximum evasion route congestion risk when the movable body travels on the evasion route and a maximum planned route congestion risk when the movable body travels on the planned route, calculated by the congestion risk calculator respectively. The method further includes comparing the maximum evasion route congestion risk with the maximum planned route congestion risk. Further, the method includes outputting the navigation route change signal when the maximum evasion route collision risk is less than the maximum planned route collision risk, and when the maximum evasion route congestion risk is less than the maximum planned route congestion risk.

In the method, the evasion starting point may be one of a current navigational position of the movable body moving on or along the planned route, any position on the unnavigated route on the planned route, and a future position of the movable body calculated from the current navigational position of the movable body moving along the planned route.

The navigation planning method of the present invention comprises calculating a planned route distance when the movable body travels on the planned route starting at the evasion starting point for a predetermined time, and an evasion route distance when the movable body travels on the evasion route starting at the evasion starting point for a predetermined time, respectively. The method further comprises determines whether to output the navigation route change signal based on the planned route distance and the evasion route distance.

The navigation planning method of the present invention comprises outputting the navigation route change signal when the maximum collision risk is less than or equal to a predetermined base the second large range. Further, the method comprises determining whether to output the navigation route change signal based on the planned route distance and the evasion route distance when the maximum collision risk is not less than the base of the second large range.

The navigation planning method of the present invention further comprises calculating the congestion risk indicating the degree of simultaneous approach of the obstacle included in the congestion risk the obstacle based on the collision risk corresponding to each of the obstacles from a plurality of the obstacles. The method comprises calculating the planned route congestion risk starting at the evasion starting point on the planned route, the evasion route congestion risk starting at the evasion starting point on the evasion route. The method comprises comparing the planned route congestion risk with the evasion route congestion risk, when the maximum evasion route collision risk is less than the maximum planned route collision risk and the evasion route congestion risk is less than the planned route congestion risk, and the navigation route change to the evasion route may be indicated.

The navigation planning method of the present invention comprises setting the return point to which the movable body returns on the planned route. The method further comprises calculating the planned route distance between the evasion starting point and the return point, and the evasion route distance between the evasion starting point and the return point . Further, the method comprises determining whether to output the navigation route change signal based on the planned route distance and the evasion route distance.

The computer program is an executable program that, when executed by a computer, causes a computer to acquire planned route information indicating a planned route of a movable body moving over water, causes the computer to acquire movable body information including a position and a direction of movement of the movable body, causes the computer to acquire obstacle information including a position and a direction of movement for each of a plurality of the obstacles in a vicinity of the movable body, causes the computer to acquire information concerning the evasion route different from the planned route starting at an evasion starting point at which the movable body starts the evacuation, and causes the computer to acquire information concerning a collision risk indicating a degree of risk of collision between the movable body and each of the obstacles from the plurality of obstacles based on the movable body information and the obstacle information. Further, a maximum of the collision risk when the movable body sails on the planned route starting at the evasion starting point and a maximum of the collision risk when the movable body sails on the evasion route starting at the evasion starting point are calculated respectively, the maximum collision risk of the planned route is compared with the maximum collision risk of the evasion route. When the maximum collision risk of the evasion route is less than the maximum collision risk of the planned route, a navigation route change signal indicating navigation route change to the evasion route is outputted.

In the navigation planning system of the present invention, when a plurality of the obstacles are detected on the planned route, the collision risk is contrasted between the evasion route set ahead of the current position or the predicted position of the movable body and the planned route, and the choice of the adoption or rejection of the evasion operation may be made based on the result, so that the movable body such as the vessel may be safely navigated.

## BRIEF DESCRIPTION OF DRAWINGS

Embodiments illustrated for means to solve the problem will be better understood by reference to the drawings. Here, similar portions are designated by similar numerals throughout. The following description is intended only as an embodiment and simply illustrates certain selected embodiments of systems, devices, and methods consistent with the challenges claimed herein and the means for solving them.

FIG. 1 is a block diagram illustrating a configuration of an embodiment of a navigation planning system of the present invention;

FIG. 2 is a diagram illustrating a positional relationship between a vessel travelling on a planned route and other vessels approaching the vessel in an embodiment of the navigation planning system of the present invention;

FIG. 3 is a diagram illustrating the positional relationship between a movable body (*i.e.,* the vessel) and an obstacle (*i.e.,* the other vessels) for calculating a collision risk in an embodiment of the navigation planning system of the present invention;

FIG. 4 is a diagram illustrating the collision risk corresponding to the positional relationship between the vessel and the other vessels in an embodiment of the navigation planning system of the present invention;

FIG. 5 is a diagram illustrating a relationship between the collision risk and a time until the vessel and the other vessels are located at a closest distance in an embodiment of the navigation planning system of the present invention;

FIG. 6 is a diagram illustrating the positional relationship between the vessel and the other vessels for calculating the collision risk in an embodiment of the navigation planning system of the present invention, and a diagram illustrating a bumper area set around the other vessels;

FIG. 7 is a diagram showing that the bumper area (area) is also set around the vessel in the diagram shown in FIG. 6;

FIG. 8 is a diagram showing an example of the relationship between the vessel and the other vessels of the navigation planning system of the present invention;

FIG. 9 is a diagram showing a change in a distance between the vessel and the other vessels when the vessel navigates the planned route and a change in the distance between the vessel and the other vessels when the vessel navigates an evasion route in an embodiment of the navigation planning system of the present invention;

FIG. 10 is a diagram showing the relationship between a maximum collision risk when the vessel navigates the planned route and a maximum collision risk when the vessel navigates the evasion route in an embodiment of the navigation planning system of the present invention;

FIG. 11 is a diagram showing a configuration of another embodiment of the navigation planning system of the present invention, and is a block diagram showing the configuration with a distance calculator in addition to the configuration shown in FIG. 1;

FIG. 12 is a diagram showing the relationship between the maximum collision risk when the vessel navigates the planned route and the maximum collision risk when the vessel navigates the evasion route in another embodiment of the navigation planning system of the present invention, and is a diagram showing that the maximum collision risk is within a predetermined base a second large range;

FIG. 13 is a diagram showing the relationship between the maximum collision risk when the vessel navigates the planned route and the maximum collision risk when the vessel navigates the evasion route in another embodiment of the navigation planning system of the present invention, and is a diagram showing that the maximum collision risk is outside the predetermined base the second large range;

FIG. 14 is a diagram showing an example of the relationship between a distance from an evasion starting point to the return point when the vessel navigates the planned route and a distance from the evasion starting point to the return point when the vessel navigates the evasion route in another embodiment of the navigation planning system of the present invention;

FIG. 15 is a diagram showing another example of the relationship between the distance from the evasion starting point to the return point when the vessel navigates the planned route and the distance from the evasion starting point to the return point when the vessel navigates the evasion route in another embodiment of the navigation planning system of the present invention;

FIG. 16 is a block diagram showing the configuration of yet another embodiment of the navigation planning system of the present invention, which further includes a congestion risk calculator and a congestion risk comparator with respect to the configuration shown in FIG. 1;

FIG. 17 is a diagram showing an example of a state where the vessel and a plurality of other vessels around the vessel exist in yet another embodiment of the navigation planning system of the present invention;

FIG. 18 is a diagram showing a configuration of yet another embodiment of the navigation planning system of the present invention, and is a block diagram showing a configuration including the congestion risk calculator, the congestion risk comparator, and the distance calculator for the configuration shown in FIG. 1;

FIG. 19 is a diagram showing a relationship between the congestion risk when the vessel navigates the planned route and the congestion risk when the vessel navigates the evasion route in another embodiment of the navigation planning system of the present invention;

FIG. 20 is a diagram showing the relationship between the congestion risk when the vessel navigates the planned route and the congestion risk when the vessel navigates the evasion route in another embodiment of the navigation planning system of the present invention and is a diagram showing that the vessel is outside the predetermined base second large range;

FIG. 21 is a flowchart showing a process in an embodiment of the navigation planning method of the present invention; and

FIG. 22 is a flowchart showing a process in an embodiment of the navigation planning method of the present invention shown in FIG. 21.

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein.

## DETAILED DESCRIPTION OF THE EMBODIMENTS

Embodiments of the navigation planning system of the present invention will now be described with examples. Other exemplary embodiments or features may further be utilized, and other modifications may be made without departing from the spirit or scope of the subject matter presented herein.

The exemplary embodiments described herein are not limited. It will be readily appreciated that the embodiments of the present invention described herein generally and illustrated in the drawings may be arranged, substituted, combined, separated, and designed in a wide variety of different configurations as expressly contemplated herein.

In the following detailed description, reference is made to the accompanying drawings which form part thereof.

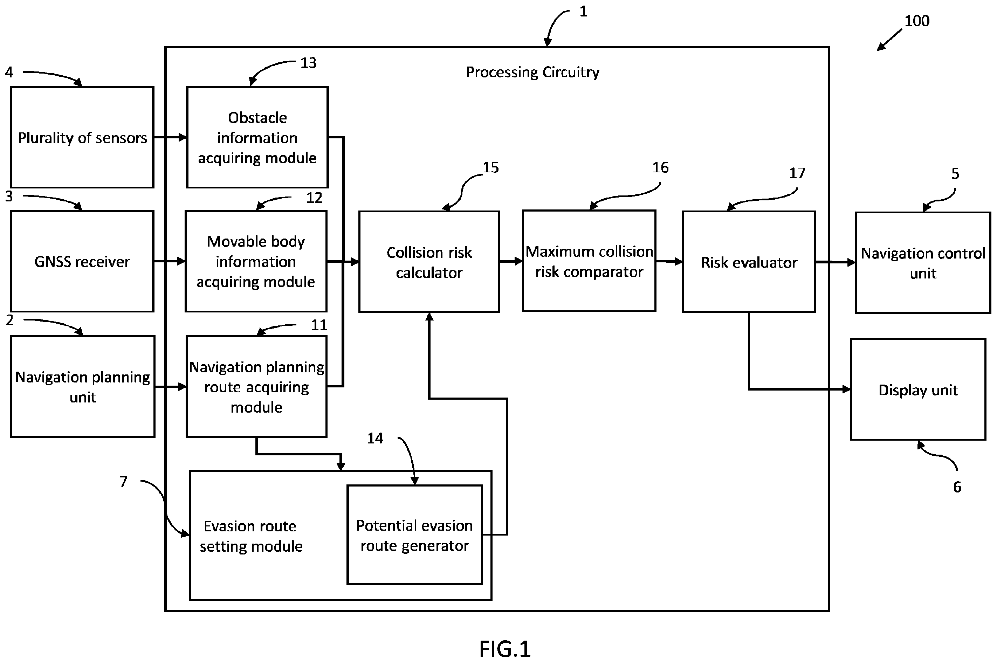

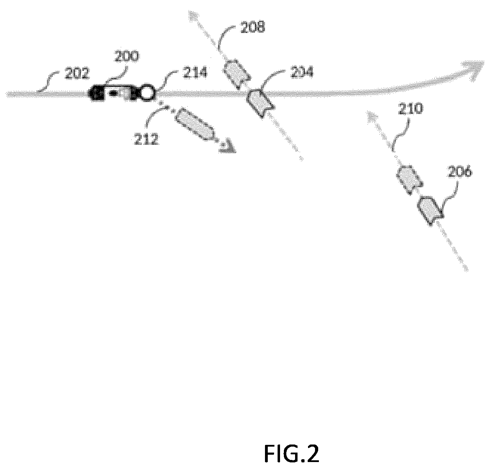

FIG. 1 is a block diagram illustrating a configuration of a navigation planning system 100 for safely navigating a movable body 200 in accordance with an embodiment of the present invention. FIG. 2 is a diagram illustrating a positional relationship between a vessel navigating on a planned route in an embodiment of the navigation planning system of the present invention and other vessels approaching the vessel.

Hereinafter, the movable body 200 may be referred to as a vessel 200 (*i.e.,* own vessel 200) as appropriate. The navigation planning system 100 may be equipped on the vessel 200 to navigate the vessel 200 from a starting point to a destination point. Once the voyage is initiated, the navigation planning system 100 may monitor a proper navigation of the vessel 200 along a planned route 202, that is a route to be followed by the vessel 200 between the starting point and the destination point.

The navigation planning system **100** may comprise a processing circuitry **100** that includes an obstacle information acquiring module **13,** a movable body information acquiring module **12,** a navigation planning route acquiring module **11,** an evasion route setting module **7,** a potential evasion route generator **14,** a collision risk calculator **15,** a maximum collision risk comparator **16,** and a risk evaluator **17.**

In one embodiment, the navigation planning system **100** is used for the purpose of ensuring that the vessel **200** may safely navigate, and avoid collisions with the other vessels identified as an obstacle, adverse sea conditions, weather, and other surrounding obstacles. A vessel operator, operating the vessel **200,** navigates along the planned route **202** with an assistance of the navigation planning system **100** and a navigation control unit **5** operating the vessel with reference to a display unit **6.** The navigation control unit **5** and the display unit **6** are appropriately equipped on the vessel or incorporated into the navigation planning system **1.**

The navigation control unit **5** is operatively connected to a risk evaluator **17.** The navigation control unit **5** is configured to monitor and control the navigation of the vessel **200** based on a determination as to whether the vessel **200** may deviate from the planned route **202** or continue navigation along the planned route **202** or an evasion route **212.** Further, the evasion route **212** is configured to evade the obstacle for further evasion.

As shown in **FIG. 2,** in this embodiment, the planned route **202** is the route that the vessel **200** may follow in order to navigate and safely reach the destination point. The planned route **202** indicates a course direction of the vessel **200** from a current location of the vessel **200.**

In **FIG. 1,** a navigation planning unit **2** is configured to store multiple routes for the navigation of the vessel **200.** In this embodiment, the vessel operator may operate a variety of peripherals operably connected to the navigation planning system **100** to perform a variety of functions according to the functions of the navigation planning system **1.** For example, a user may provide various instructions to the navigation planning system1 about the starting point location and the destination point of the navigation of the vessel **200** by operating a peripheral device such as a keyboard or mouse.

The navigation planning unit **2** may provide one or more routes for the navigation of the ow vessel **200** from the starting point to the destination point based on information such as a source location associated with the starting point and a destination location associated with the destination location obtained from the user. In this embodiment, each route from the one or more routes may include a date and time of the navigation, weather conditions, tidal conditions, and the like, and may be associated with this information.

The navigation planning unit **2** receives a user input from the vessel operator or an associated person for the selection of the route as the planned route **202** for the navigation of the vessel **200** from a starting point location (*i.e.,* the source location) to the destination location. In this embodiment, the vessel operator selects the route to travel, but as an alternative embodiment, the navigation planning unit **2** may select an optimal route based on current weather conditions, travel time, tidal or tidal current conditions, and the like.

The navigation planning system **100** utilizes information related to the movable **200** body, such as the other vessels, and a plurality of obstacles **204, 206** in an area surrounding the vessel **200** to safely navigate the vessel **200** from its origin to the destination point along the planned route **202.**

Further, a Global Navigation Satellite System (GNSS) receiver **3,** typically mounted on the vessel **200,** obtains the movable body information. The movable body information comprises a position, a direction of movement *i.e.,* a movement direction, and a speed of the vessel **200.** The GNSS receiver **3** receives a satellite signal and accurately obtains the movable body information for the vessel **200.** The movable body information may further include information about a velocity of the movable body **200.** Further, obstacle information may include information about a velocity of the obstacle. The movable body information may be calculated from changes in the position and the movement direction of the movable body **200.**

Further, a plurality of sensors **4** obtains the obstacle information. The obstacle information includes a position, a movement direction, and a speed of a plurality of the obstacles **204** and **206** that may interfere with the navigation of the vessel **200.** The plurality of sensors **4** may correspond to one or more navigation electronics. In one embodiment, specific configuration of the plurality of sensors **4** is a device having a detection or sensing function such as a radio detection and ranging (RADAR) device, a light detection and ranging (LIDAR) device, an acoustic navigation and ranging (SONAR) device, an automatic identification system (AIS) receiver, and an image sensor such as a camera or video recorder mounted on the vessel **200.** The plurality of sensors **4** may be able to detect the obstacle in the navigation of the vessel **200,** not limited to the above, and may also be provided with information transmitted from the other vessels or a land management station, not limited to the plurality of sensors mounted on the vessel **200.**

In this embodiment, the obstacle information includes information detected by any or at least one of radar, LIDAR device, SONAR device, and an image sensor, information acquired by an AIS receiver, information transmitted from another vessel, and information acquired by detecting radio communication at a location other than the vessel **200.**

In this embodiment, for ease of understanding, there are two obstacles **204** and **206** around the vessel **200** as shown in **FIG. 2,** but the number of the obstacles is not limited to only two and may be more than two. In various other embodiments, the plurality of the obstacles that are planning to cross or approach the planned route **202,** or are threatened, may include any number of the obstacles greater than or equal to two.

In this embodiment, the obstacle information further includes information related to other movable bodies, including at least one of the other vessels, currents, weather, reefs, and stranded vessels. The information related to the other movable bodies may be obtained in a manner like obtaining information for the plurality of the obstacles **204, 206.**

Referring again to **FIG. 1,** the navigation planning system **100** includes a navigation planning route acquiring module **11** for obtaining information about the planned route of the vessel **200** from the navigation planning unit **2,** a movable body information acquiring module **12** for obtaining location information, and the like. of the vessel **200** obtained by the GNSS receiver **3,** an obstacle information acquiring module **13** for obtaining the obstacle information detected by the plurality of sensors **4** and an evasion route setting module **7.** The evasion route setting module **7** sets the evasion route of the vessel **200** based on the information.

The navigation planning route acquiring module **11** receives the planned route selected by the vessel operator as the planned route **202,** and is operatively connected to the navigation planning unit **2.** The movable body information acquiring module **12** is operatively connected to and may communicate with the GNSS receiver **3** to receive the movable body information associated with the vessel **200.** In addition, the movable body information acquiring module **12** is configured to store the movable body information.

In this embodiment, the movable body information acquiring module **12** periodically acquires the movable body information of the vessel **200,** and the obstacle information acquiring module **13** periodically acquires the obstacle information of the plurality of the obstacles **204** and **206.**

The obstacle information acquiring module **13** is operatively connected to and may communicate with the plurality of sensors **4** to receive the obstacle information related to the plurality of the obstacles **204** and **206.** The obstacle information acquiring module **13** is configured to receive the obstacle information including the position, the movement direction, and the speed of each of the obstacles **204** and **206** traversing or approaching the planned route traversed by the vessel **200** as detected by the plurality of sensors **4.** In this embodiment, the planned route is the planned route **202** that the vessel **200** plans to navigate. The obstacle information acquiring module **13** is further configured to store the obstacle information.

The evasion route setting module **7** may acquire evasion route information generated outside the movable body **200** via wireless communication such as satellite communication or may acquire the evasion route information about the evasion route set in the evasion route setting module **7.** The evasion route setting module **7** includes a potential evasion route generator **14** for generating a potential evasion route from a plurality of potential evasion routes having routes different from the planned route between an evasion starting point and a return point on the planned route. The risk evaluator **17** includes an evasion route selector (not shown in the figures) for selecting the evasion route from the plurality of potential evasion routes.

The evasion route selector may be configured to select which the evasion route is the appropriate route when the determination is made to switch from the planned route to the evasion route, and the selection method may be described later. Although the evasion route selector is not shown in the figures, but it is provided in the risk evaluator **17** and functions to select the evasion route in consideration of a collision risk a distance of the evasion route and the like to be described later.

The evasion route setting module **7** may be provided with a display for displaying a chart navigated by the movable body **200,** and a user interface for receiving the route set by the user from the chart displayed on the display. The evasion route setting module **7** may further acquire information of the evasion route set.

Further, the situation around the vessel **200** may be detected at a predetermined period, and the evasion route may be set at any time at the predetermined period. In one embodiment, the evasion route may be set when the obstacle is detected, and the collision risk of the obstacle is determined to be high.

Further, the situation around the vessel **200** is detected at the predetermined period, and the evasion route setting module **7** sets the evasion route at the predetermined period. The evasion route setting module **7** includes the potential evasion route **14** generator which automatically generates the plurality of potential evasion route. The evasion route selector that selects the evasion route from the plurality of potential evasion route by performing a predetermined condition, for example, the collision risk evaluation result.

In addition to the above configuration, the navigation planning system **100** of the present invention includes the collision risk calculator **15,** the maximum collision risk comparator **16,** and the risk evaluator **17.** The collision risk calculator **15** is operatively connected to and may communicate with the navigation planning route acquiring module **11,** the movable body information acquiring module **12,** and the obstacle information acquiring module **13.**

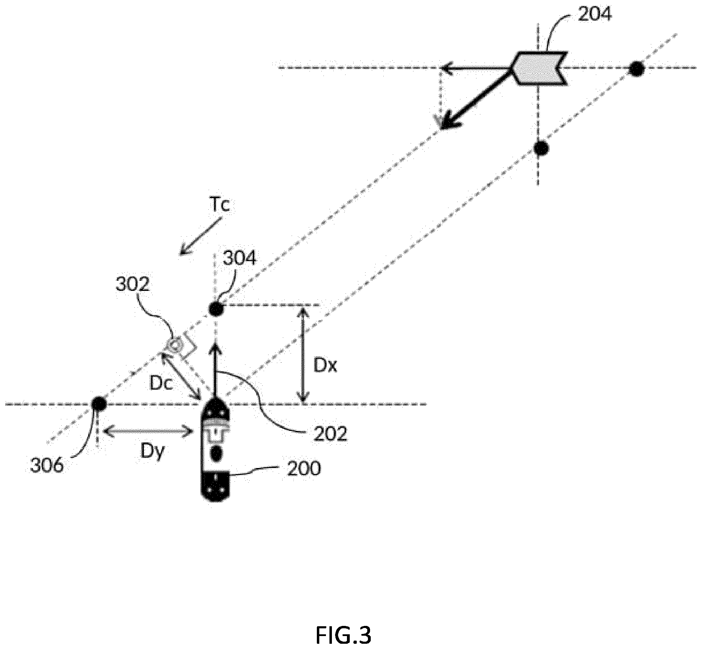

The collision risk calculator **15** receives the planned route **202** as the route to be navigated, the movable body information of the vessel **200,** and the obstacle information of the plurality of obstacles **204** and **206** . The collision risk calculator **15** further calculates a risk that quantifies the collision risk with the vessel **200.** The calculation of the collision risk may be described in detail later with reference to **FIGs. 3 to 7.**

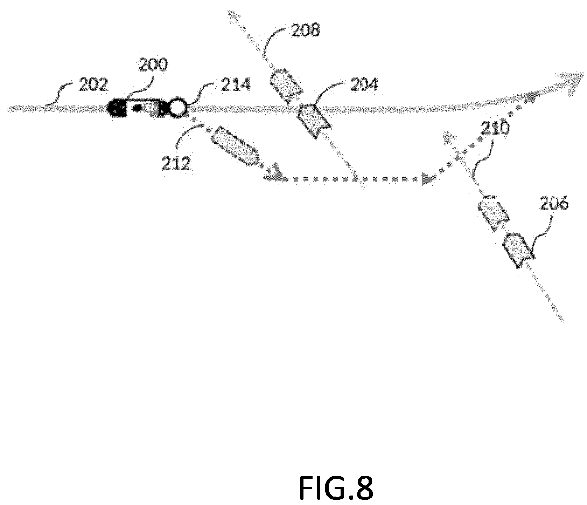

**FIG. 8** shows that the vessel **200** is traveling on the planned route **202,** and the other vessels **204** and **206,** which are the obstacles, are traveling along and approaching a predicted unnavigated (future) routes **208** and **210,** respectively. When the vessel **200** continues to travel along the planned route, it shows a possibility of interference or collision of the vessel **200** and the other vessels **204** and **206** on the predicted future routes **208** and **210** which are crossing the planned route **202.**

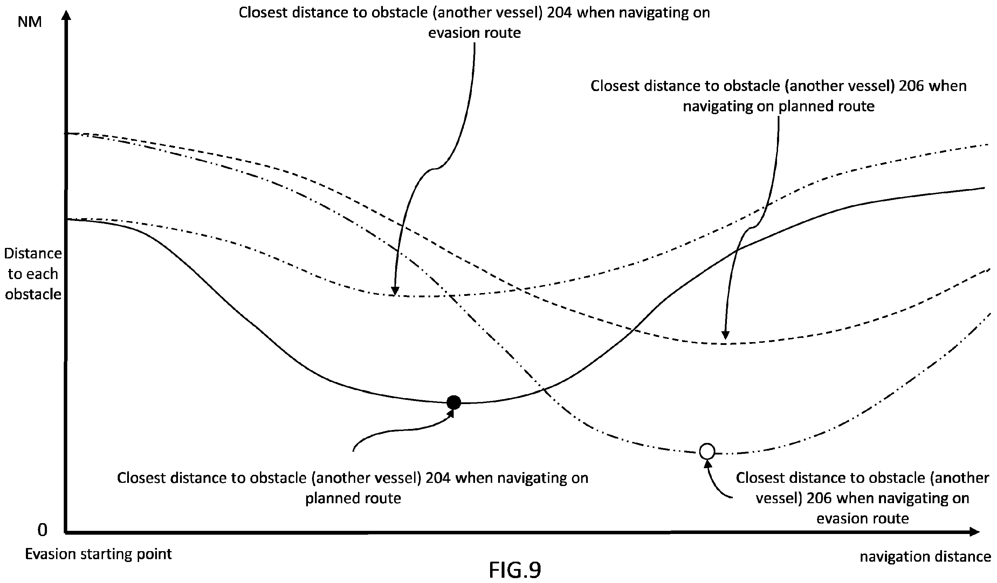

**FIG. 9** shows the change in distance for the other vessel **204** (*i.e.,* solid line) and the other vessel **206** (*i.e.,* dashed line) when the vessel **200** travels for a predetermined time from the evasion starting point at which it begins its evacuation on the planned route. Further, **FIG. 9** shows the change in distance for the other vessel **204** (*i.e.,* dash-dot line) and the other vessel **206** (*i.e.,* dash-dot line) when the vessel **200** travels for the predetermined time on the evasion route outside the planned route at the evasion starting point.

In one embodiment, when the vessel **200** deviates from the planned route, the other vessel **204** approach the vessel **200** under the circumstances shown in **FIG. 8,** and the distance between the two vessels approaches. At the position indicated by the black circle in **FIG. 9,** the two vessels approach the closest, and then the distance increases because the two vessels move away from each other. Subsequently, the other vessel **206** approach the vessel **200,** and the distance is larger than that of the other vessel **204** even when they approach the closest. That is, the collision risk with the own ship is small. Therefore, the maximum collision risk on the planned route is calculated based on the state where the other vessel **204** and **206** are closest to each other.

On the other hand, when the vessel **200** evades on the evasion route, under the situation shown in **FIG. 8,** the other vessel **204** approaches the vessel **200,** and the distance between the two, showing a change as shown by the dashed line in **FIG. 9.** The distance is larger than the distance when the vessel **200** travels on the planned route. However, when the other vessel **206** approaches, the nearest approach distance is closer to the distance indicated by the white circle and is smaller than the nearest approach distance to the other vessel **204** when the vessel **200** travels on the planned route. That is, the collision risk is high. Therefore, the maximum collision risk of the evasion route is calculated based on the state where the other vessel **206** and **204** are closest to each other. This value is larger than the maximum risk value of the planned route.

Referring again to **FIG. 1,** the collision risk calculator **15** calculates a collision risk expected to be on the planned route **202** based on the movable body information of the vessel **200** and the obstacle information for the other vessels **204** and **206,** respectively.

The collision risk calculator **15** is configured to calculate the collision risk associated with the obstacle (*i.e.,* the other vessels **204** and **206)** when traveling on the planned route based on the movable body information and the obstacle information, assuming that the point of the vessel **200** or the position on the planned route or where the vessel **200** is currently located is the evasion starting point. Similarly, the collision risk in the case of traveling on the evasion route for the predetermined time is calculated starting from the evasion starting point.

The navigation planning system **100** of the present invention further includes the maximum collision risk comparator **16,** and the collision risk is input from the collision risk calculator **15** to the maximum collision risk comparator **16.** The maximum collision risk comparator **16** calculates the maximum value of each of the collision risk of the planned route and the evasion route, and compares them.

The maximum collision risk comparator **16** calculates a planned route maximum risk value and an evasion route maximum risk value, and compares the values of both. In the example of this embodiment shown here, since the maximum collision risk for the other vessels **206** on the evasion route of the vessel **200** is higher than the other vessels **204** on the planned route, as described above, the comparison result is output to the risk evaluator **17.**

In the above description with reference to **FIG. 9,** the evasion is started from the position where the vessel **200** is actually present on the planned route, and this is designated as the evasion starting point, but the evasion starting point is not limited to this, and the actual position on the planned route is affected by sea conditions, and there may be a discrepancy, but this may be the case.

The vessel **200** may be any point on the unnavigated route of the planned route rather than the current location, or it may be a predicted location calculated based on the movable body information of the vessel **200** based on the actual location described above.

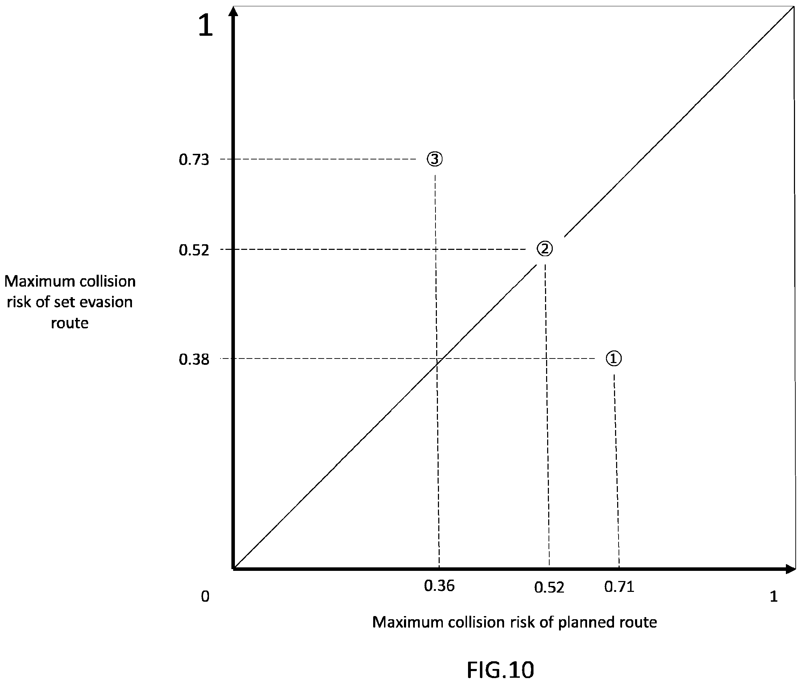

**FIG. 10** is a diagram showing the relationship between the maximum collision risk when the vessel navigates the planned route and the maximum collision risk when the vessel navigates the evasion route in an embodiment of the navigation planning system of the present invention.

Three cases are shown here. That is, in case 1, the planned route maximum risk value is 0.71, that of the evasion route is 0.38, and that of the evasion route is smaller. In case 2, both are 0.52, and in case 3, they are 0.36 and 0.73.

In case 1, the planned route maximum collision risk is significantly reduced by that of the evasion route maximum collision risk, indicating that the collision risk is reduced by navigating the evasion route rather than by navigating the planned route. In case 2, both values are the same, indicating that the collision risk does not change whether the planned route is navigated or switched to the evasion route. In case 3, the evasion route maximum collision risk is rather large, indicating that the collision risk may be reduced by navigating the planned route as it is.

As described above, the navigation planning system **100** of the present invention may examine whether the collision risk is reduced by the evasion route set for the purpose of avoiding the obstacle.

Further, calculation of the collision risk with the obstacle of the vessel **200** will be described with reference to the respective figures of **FIGS. 3 to 7. FIG. 3** shows the determination of a collision risk associated with the obstacle **204** along the planned route according to an embodiment of the navigation planning system of the present invention.

The collision risk calculator **15** calculates the collision risk for the obstacle **204** based on the movable body information and the obstacle information. In one embodiment, the collision risk of the obstacle **204** is determined based on the position, the movement direction, and speed of the vessel **200,** and the position, the movement direction, and speed of the obstacle **204.**

The collision risk calculator **15** is configured to determine a closest proximity distance Dc and/or a closest proximity distance Dx or Dy in a specific direction between the vessel **200** and the obstacle **204** based on the movable body information and the obstacle information. In this embodiment, the closest proximity distance Dc is the distance between the current position of the vessel **200** and the closest proximity point 302. In the figure, the closest proximity distance Dx in a vertical direction (For example, the direction of navigation as seen from the vessel **200**) is the distance between the current position of the vessel **200** and the closest proximity point **304** in the vertical direction.

The closest proximity distance Dy in the vertical direction (In this case, the direction of navigation of the vessel is horizontal.) is the distance between the current position of the vessel **200** and the closest proximity point **306** in the horizontal direction. The collision risk calculator **15** calculates the closest proximity distance Dc, Dx, and Dy when the vessel **200** and the obstacle **204** approach from the positional relationship between the vessel **200** and the obstacle **204,** the relative velocity between the vessel **200** and the obstacle **204,** and the movement direction and velocity between the vessel **200** and the obstacle **204.**

The collision risk calculator **15** calculates the collision risk of the obstacle **204** based on at least one of the closest proximity distance Dc between the vessel **200** and the obstacle 204 and the closest proximity distance Dx or Dy in a specific direction.

In this embodiment, when the closest proximity distance Dc is less than or equal to a predetermined distance and the risk evaluator **17** determines that the collision risk is high, the vessel **200** needs to avoid the obstacle **204.** In this case, the vessel **200** leaves the planned route **202** and travels along a different route, namely the evasion route **212** to be configured. On the other hand, if the closest approach distance Dc is greater than the predetermined distance, the risk evaluator determines that the collision risk is low, and the vessel **200** may continue to travel along the planned route **202.**

In this embodiment, the collision risk may be calculated by specifying the positional relationship between the vessel **200** and the obstacle **204** based on either the closest approach distance Dx in the vertical direction or the closest approach distance Dy in the horizontal direction. Generally, the risk of collision between the vessel **200** and the obstacle **204** increases when the obstacle **204** crosses the front of the vessel **200.**

In this embodiment, the collision risk calculator **15** is further configured to determine the time Tc required for the other vessels to reach the closest approach distance **302.** Based on the closest approach distance Dc and the time Tc required for the other vessels to reach the closest approach distance **302,** the collision risk calculator **15** determines the collision risk of the obstacle **204** when the vessel **200** is traveling from the origin (For example, the starting point) of the planned route **202** toward the destination point. The time Tc required for the other vessels to reach the closest approach distance **302** is calculated based on the movable body information and the obstacle information.

When the collision risk is calculated based on the closest distance Dc between the vessel **200** and the obstacle **204,** the collision risk increases even if the time until the vessel 200 approaches the obstacle **204** is very long. As a result, the vessel **200** may have to deviate from the planned route to avoid collision with the obstacle **204** after a time.

Therefore, in this embodiment, the collision risk associated with the obstacle **204** is determined by taking into account the closest distance Dc between the own vessel **200** and the obstacle **204** and the time Tc required for the other vessels to reach the closest point **302.**

As an example, the collision risk for the obstacle **204** is calculated and determined based on the following equation (1).

$$\text{collision risk} = \max (Dx, Dy) * RTc \qquad (1)$$

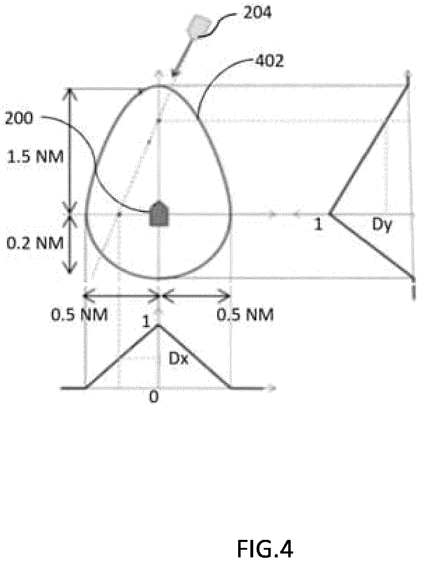

**FIG. 4** further illustrates the relationship between the collision risk and the vertical distance between the vessel **200** and the obstacle **204,** and the relationship between the collision risk and the horizontal distance between the vessel **200** and the obstacle **204.** As an example, the collision risk between the closest neighbor distances Dx and Dy in the vertical and horizontal directions is shown.

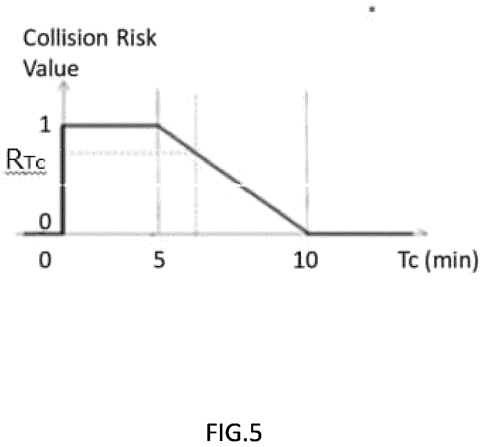

**FIG. 5** shows the relationship between the collision risk and the time Tc required for the other vessel, that is the obstacle for the vessel **200,** to reach the closest neighbor **302.** When the time Tc is small, the collision risk increases. In the example shown here, when the time Tc is less than or equal to a predetermined time, the collision risk is high, and in this state, the maximum value 1 is determined.

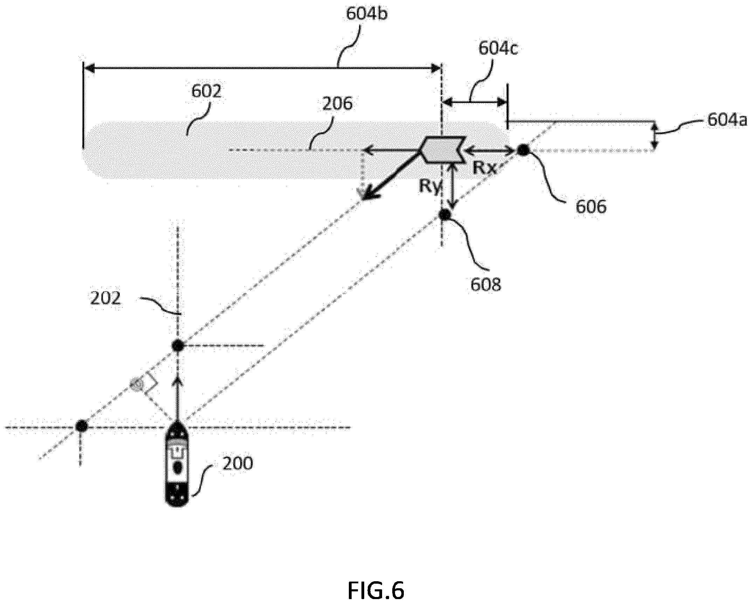

**FIG. 6** illustrates determining the collision risk when the vessel **200** approaches the obstacle **204,** according to another embodiment of the navigation planning system of the present invention. In one embodiment, an obstacle bumper area **602** of the obstacle **204** is determined based on the position, the movement direction, and the speed of the obstacle **204,** or vessel. The obstacle bumper area **602** of the obstacle **204** is located on the projected future route **206** of the obstacle **204** based on the movement direction of the obstacle **204.**

The obstacle bumper area **602** of the obstacle **204** includes an area around the obstacle 204. The obstacle bumper area **602** of the obstacle **204** may be determined based on the safe passage distances **604a, 604b,** and **604c,** which are the closest distances allowed on the side, front, and back of the vessel **200,** respectively, to prevent collisions.

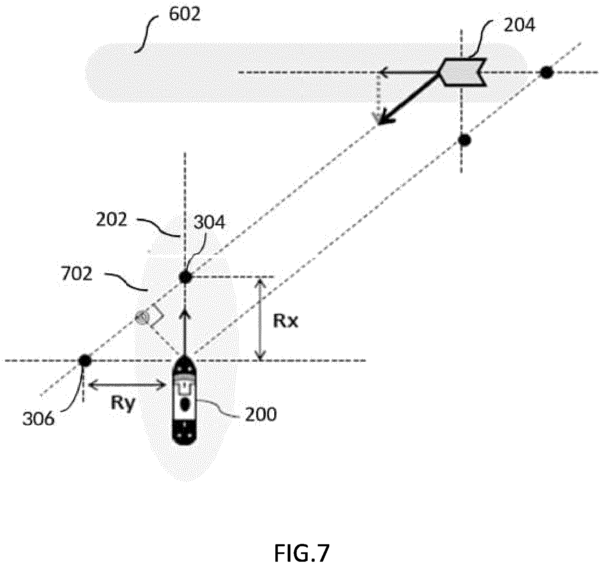

The obstacle bumper area 602 corresponds to a restricted area and may simultaneously recognize the direction of the potential collision and the distance between the vessel **200** and the obstacle **204.** The closest approach point (relative to the obstacle **204)** between the vessel **200** and the obstacle **204** in a vertical or horizontal direction **606** or **608** is determined based on the movable body information and the obstacle information. There is no risk of collision when the closest approach point **606** or **608** between the vessel **200** and the obstacle **204** in a vertical or horizontal direction is outside the obstacle bumper area **602.** As shown in **FIG. 7,** in this embodiment, there is no risk of collision because neither the closest approach point **606** in a vertical direction at a distance of Rx from the obstacle **204** nor the closest approach point **608** in a horizontal direction at a distance of Ry exists in the obstacle bumper area **602.**

In this embodiment, the collision risk calculator **15** calculates a time required for the vessel **200** to penetrate the obstacle bumper area **602** based on the relative speed between the vessel **200** and the obstacle **204.** The collision risk calculator **15** further calculates the collision risk of the obstacle **204** based on the time required for the vessel **200** to penetrate the obstacle bumper area **602.**

**FIG. 7** illustrates the determination of the collision risk when the vessel **200** approaches the obstacle **204** according to yet another embodiment of the navigation planning system of the present invention. In one embodiment, a movable body bumper area **702** of the vessel **200** is determined based on the location, the movement direction, and the speed of the vessel **200.** The movable body bumper area **702** of the vessel **200** is located on the intended route (*i.e., the* planned route **202** of this embodiment) of the vessel **200** based on the direction of movement of the vessel **200** and includes the vessel **200** and the surrounding area.

The closest approach point **304** in the vertical direction or the closest approach point **306** in the horizontal direction between the vessel **200** and the obstacle **204** is calculated based on the movable body information and the obstacle information. When the closest approach point **304** in the vertical direction and closest approach point **306** in the horizontal direction between the vessel **200** and the obstacle **204** are outside the movable body bumper area, then there is no risk of collision in area 702.

As shown in **FIG. 7,** in the present embodiment, the closest approach point in the vertical direction **304** at a distance Rx from the vessel **200** is located in the movable body bumper area **702,** and therefore there is a risk of collision. There is a risk of collision if the vessel **200** continues to navigate in the current direction along the planned route and enters the obstacle bumper area **602** of the obstacle **204.**

In this embodiment, the collision risk calculator **15** determines the time required for the movable body bumper area **702** to enter the obstacle bumper area **602** based on the relative speeds of the vessel **200** and the obstacle **204** based on the speeds of the vessel **200** and the obstacle **204** and the distance between the vessel **200** and the obstacle **204.**

The collision risk calculator **15** further calculates the collision risk associated with the obstacle **204** based on the time required for the movable body bumper area **702** to enter the obstacle bumper area **602.** The collision risk associated with the obstacle **204** may be determined in a manner like the determination of the collision risk associated with the obstacle **204** described in **FIGs. 6** to **11.**

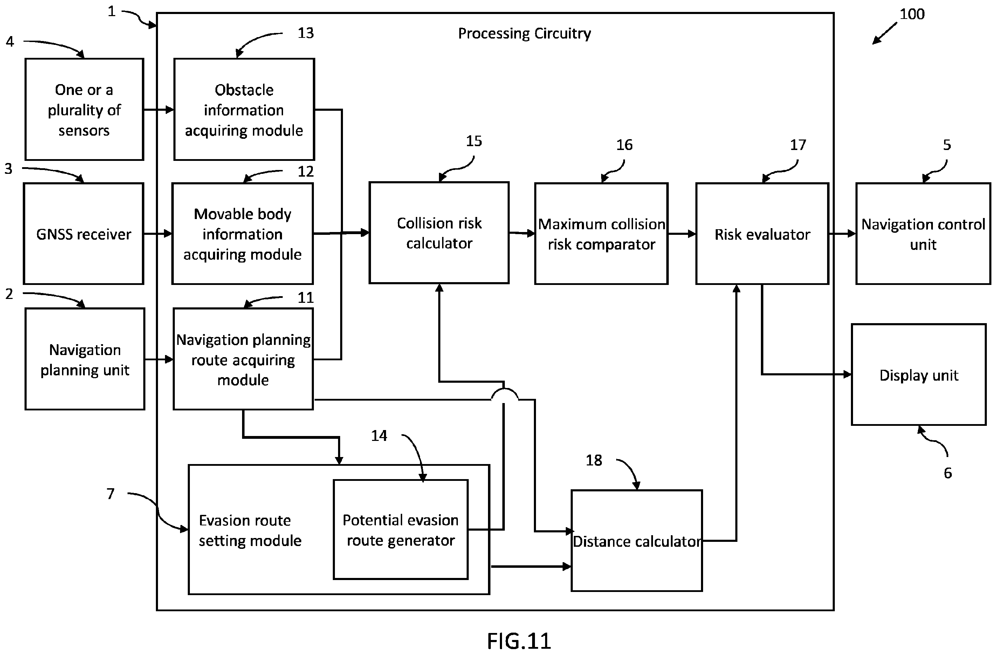

Further, with reference to **FIG. 11,** a determination of the necessity of a navigation route change will be described in which the distance from the evasion starting point of the planned route and the evasion route is taken into account in addition to the comparison of the maximum collision risk.

**FIG. 11** is a block diagram showing a configuration of another embodiment of the navigation planning system **100** of the present invention, which differs from the configuration of the embodiment shown in **FIG. 1** in that the processing circuitry 1 includes a distance calculator **18.** The distance calculator **18** obtains information about the route from each of the navigation planning route acquiring module **11** and the evasion route setting module **7.** The distance calculator **18** further calculates the distance from the evasion starting point of each of the planned route and the evasion route.

The distance from the evasion starting point may be calculated for each of the planned route and the evasion route as the distance traveled by the vessel **200** when a predetermined time has elapsed since the start of the evasion. The return point at which the vessel **200** returns from the evasion route may be set on the planned route, and the distance between the evasion starting point and the return point may be calculated for each of the planned route and the evasion route.

As described above, the location of the evasion starting point may be set as the current location of the vessel **200,** or it may be assumed that the planned route is located on an unnavigated route.

The calculation result of the distance described above is output to the risk evaluator, and the necessity of the navigation route change is determined in conjunction with the result of the comparison between the planned route output from maximum collision risk comparator **16** and the maximum collision risk of each of the evasion routes.

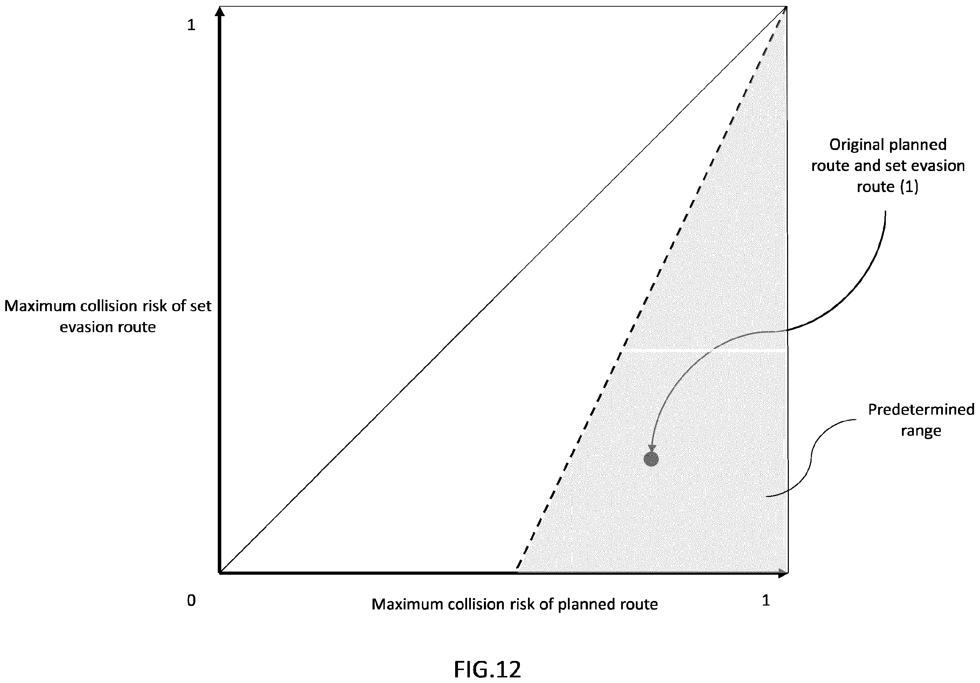

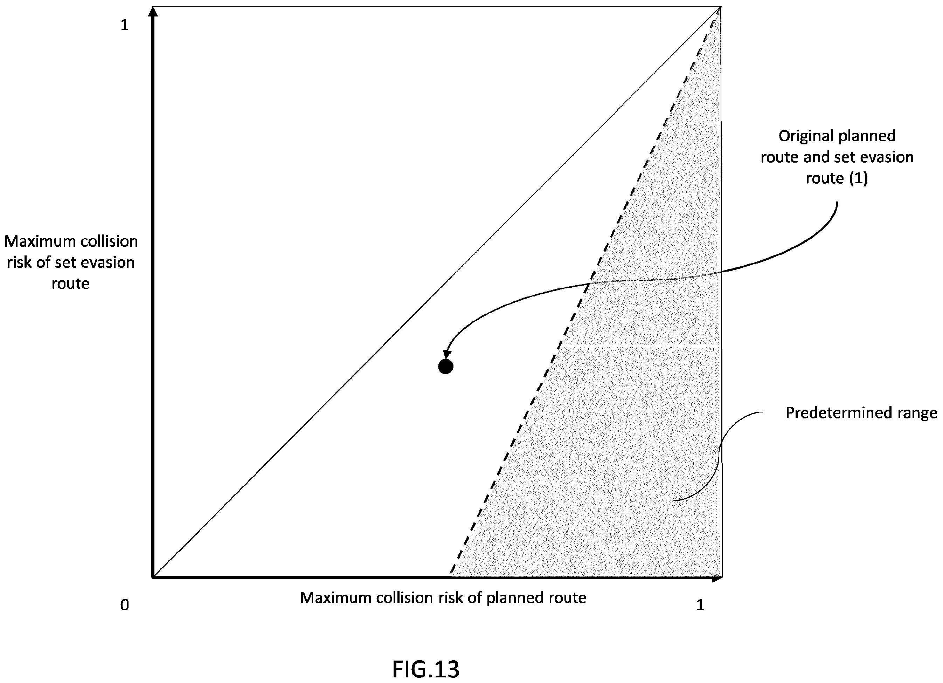

**FIGs. 12** and **13** are diagrams showing the relationship between the maximum collision risk when the vessel navigates the planned route and the maximum collision risk when the vessel navigates the evasion route in another embodiment of the navigation planning system of the present invention.

**FIG. 12** shows that the position in the diagram showing the relationship between the two in a predetermined reference range. **FIG. 13** shows that the position is outside the predetermined reference range. That is, the gray shaded area in the diagram shows an example of the predetermined reference range, and the relationship between the two indicated by a black circle is within the predetermined reference range. The reference range indicates that the maximum collision risk of the evasion route (1) set for the planned route is sufficiently low, and that it is better to switch the route to the evasion route (1) even if the difference between the congestion risk described later and the distance between the planned route and the evasion route (1) is large in order to ensure a higher level of safety if it is within the reference range.

On the other hand, in **FIG. 13,** the black circle indicating the relationship between the planned route maximum collision risk and the evasion route (2) maximum collision risk is located in the lower right area of the figure, *i.e.,* the position where the risk is reduced, but is not within the base a second large range. That is, although the maximum collision risk can be reduced by changing the route to the evasion route (2), a large reduction like that of the evasion route (1) may not be expected.

In this case, the decision not to perform the navigation route change to the evasion route (2) may be made, but the necessity of the above decision may be made by taking further factors into consideration. In the positional embodiment shown in **FIG. 11,** the distance between the evasion starting point and the return point of the planned route and the evasion route is calculated, and this decision is also made in addition to the decision factors. Although the effect of risk reduction by performing navigation route change to the evasion route (2) is not large, there is an advantage that the planned route may be returned to the planned route at an early stage.

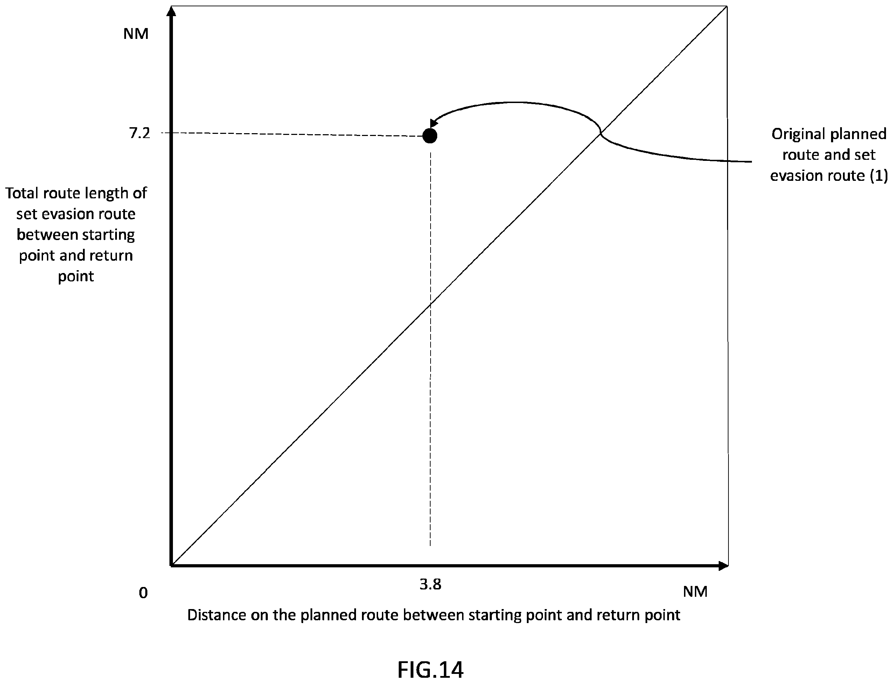

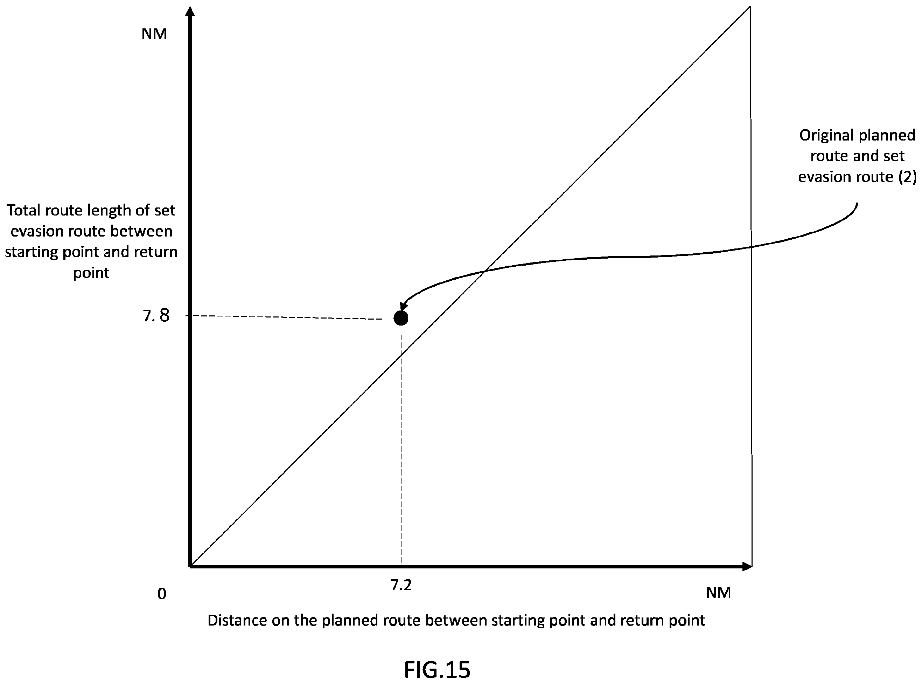

Further, **FIGs. 14** and **15** show the relationship between the distance on the planned route from the evasion starting point to the return point of the evasion route and the distance from the evasion starting point to the return point of the evasion route, that is, the total route length. In **FIG. 14,** an increase distance of the total route length (7.2 Nautical Mile) of the evasion route is 3.4NM with respect to the distance on the planned route (3.8NM), but the results shown in **FIG. 15** show that the distance between the two routes is same. Therefore, it is possible to select the evasion route when the increase distance is small.

In the present embodiment, the planned route and the evasion route are respectively navigated for a predetermined time from the evasion starting point as an example, but the return point of the vessel **200** may be set on the planned route in advance to calculate the distance when the planned route and the evasion route are navigated respectively.

In the above case, it is considered that the planned route may have a shorter distance than the evasion route, but the evasion route may have a shorter distance than the planned route, and in this case, it is needless to say that the decision to change to the evasion route may be made if the above conditions are satisfied.

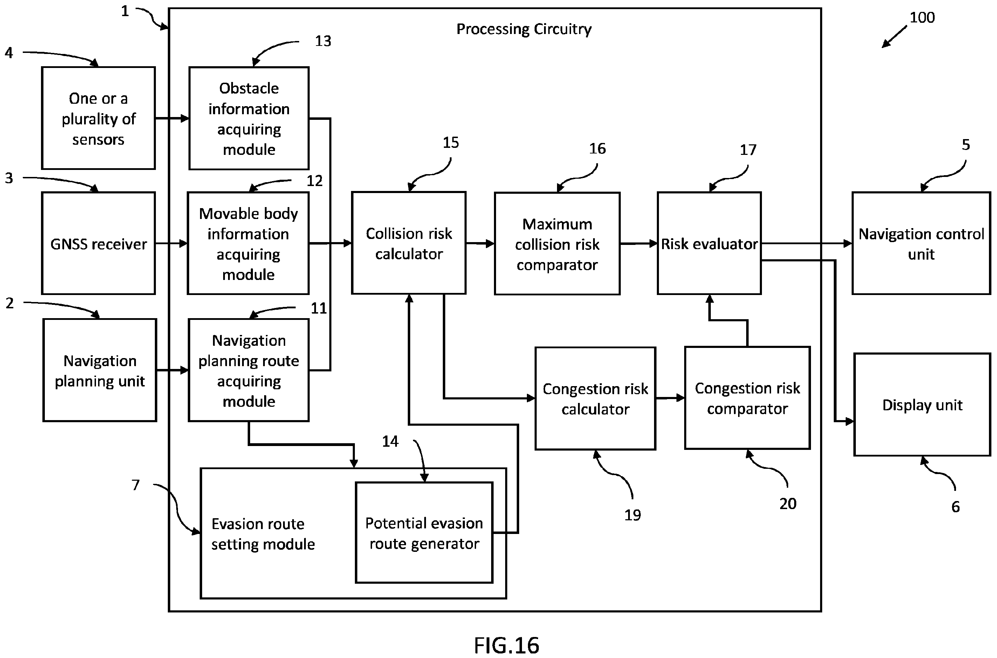

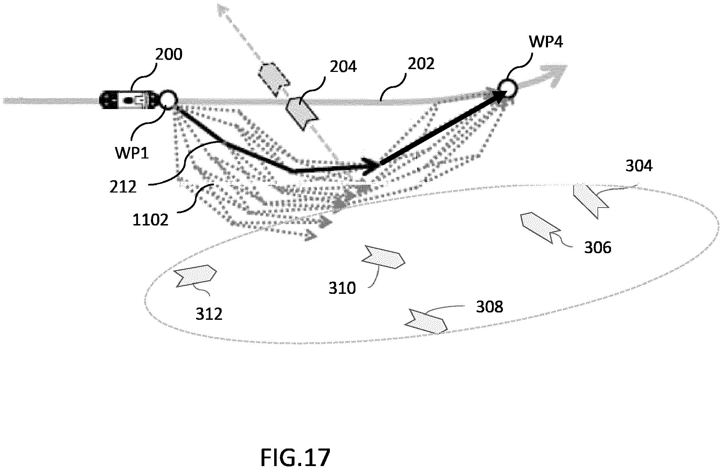

Further, a configuration in which the congestion risk is added to the determination of the necessity of the navigation route change in the navigation planning system **100** of the present invention will be described with reference to **FIGs. 16** and **17.**

In the present embodiment, as shown in **FIG. 16,** the configuration is different from that of the embodiment shown in **FIG. 1** in that the processing circuitry 1 includes a congestion risk calculator **19** and a congestion risk comparator **20,** and the result is used for the determination of the necessity of the risk evaluator.

The congestion risk calculator **19** is operatively connected to the collision risk calculator **15** and is configured to communicate with the collision risk calculator **15** to receive a plurality of the collision risks for the plurality of the obstacle (the other vessel) **204** and other obstacles (the other vessels) **304** to **312** along the planned route **202** shown in **FIG. 17.**

The congestion risk calculator **19** is configured to determine the congestion risk associated with the planned route **202** along the current route direction based on the plurality of the collision risks. The congestion risk indicates the degree of simultaneous approach of the obstacle included in the congestion risk area based on the collision risk corresponding to each of the obstacles included in the obstacle in the congestion area.

The congestion risk calculator **19** determines the congestion risk corresponding to the planned route 202 based on a value of the logical sum of the collision risks as an example of the calculation corresponding to the plurality of the obstacles **204** and the obstacles **304** to **312**. In this embodiment, the congestion risk calculator **19** determines the congestion risk of the planned route **202** based on the value of the logical sum of the plurality of the collision risks excluding the maximum collision risk, that is, the collision risk for the obstacle **204,** among the plurality of the collision risks.

The term "logical sum" as used herein refers to a logical sum based on the logic that is true when one or both of two propositions in a logical operation are true and false when both are false, that is, the logical sum of a logical circuit or a binary numeric value has an output of 1 when one or both of the two inputs are 1 and 0 when both are 0. For example, if there are 4 obstacle Orbs (1), Obs (2), Obs (3), and Obs (4), and the collision risk is 0.3, 0.5, 0.7, and 0.9, respectively, the collision risk of maximum is 0.9 of Obs (4), and the logical sum of 3 Obs (1) through Obs (3) excluding them is 0.7.

On the other hand, for the cases other than the obstacle with the maximum collision risk, the collision risk caused by the degree of simultaneous approach, that is, the congestion risk, is evaluated. In order to do this, for the set of obstacles with the collision risk other than maximum collision risk, the collision risk is input by the congestion risk calculator 19, and the congestion risk is calculated.

In the present embodiment, the collision risk associated with the obstacle having the maximum collision risk is evaluated individually, and may be excluded. When the congestion risk is calculated excluding the obstacle having the maximum collision risk, the congestion risk is calculated appropriately by including the obstacle having a second large maximum risk value following the maximum risk value.

In evaluating the collision risk, it is better to calculate the congestion risk based on the collision risk of one or more other obstacles excluding the obstacle having the maximum collision risk, and evaluate the maximum collision risk and the congestion risk separately. In one embodiment, the priority is given to avoiding collisions with the obstacle having the maximum collision risk.

Furthermore, consider that other collision risks, such as collision risks with the obstacle including the obstacle having the second large maximum collision risk, which is the next highest the collision risk, when performing collision avoidance. The configuration shown in FIG. 16 is a configuration according to this. However, the maximum collision risk may be included in the calculation of the congestion risk.

In **FIG. 17,** the evasion starting point WP1 and the return point WP4 may be arbitrarily set for each potential evasion route if they are on the planned route **202**. With regards to the evasion starting point WP1, for example, if the collision risk is increased, the position where the vessel is currently sailing may be set to the evasion starting point WP1, and the like. The position of the return point WP4 may be determined according to a distance setting policy of the evasion route, as described later.

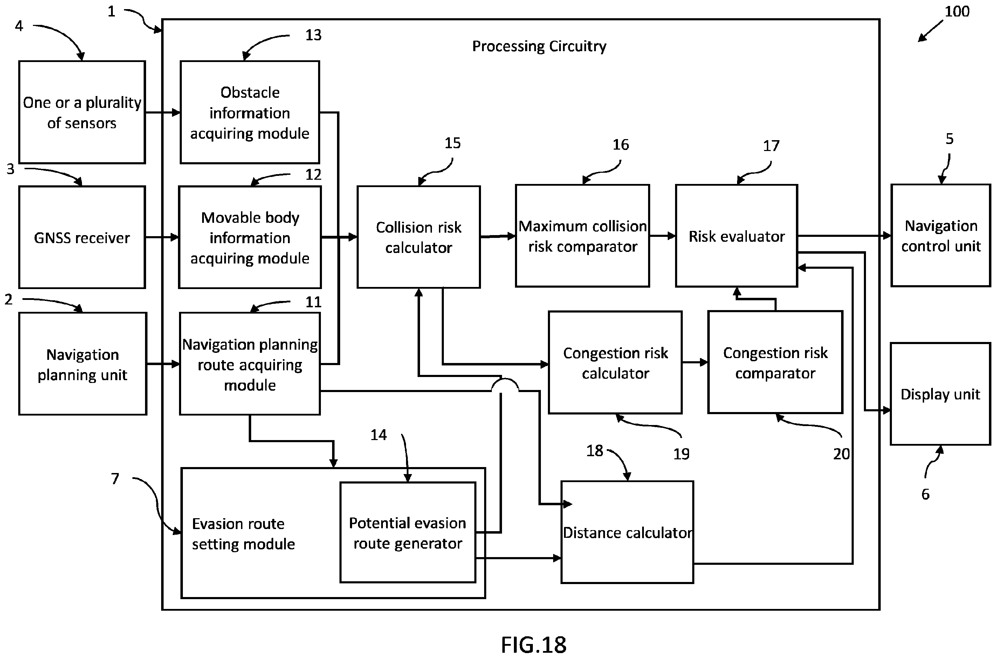

Further, another embodiment of the navigation planning system of the present invention will now be described with reference to **FIG. 18.**

An embodiment of the navigation planning system of the present invention shown in **FIG. 18,** the processing circuitry 1 includes the distance calculator **18** provided in the embodiment shown in **FIG. 11,** and the congestion risk calculator **19** and the congestion risk comparator **20** provided in the embodiment shown in **FIG. 16.** The risk evaluator **17** collectively determines the navigation route change with respect to the result of the comparison between the maximum risk value comparator **16** shown at the beginning, the result of the comparison between the congestion risk comparator **20,** and the difference between the distances of the planned route and the evasion route calculated by the distance calculator **18.**

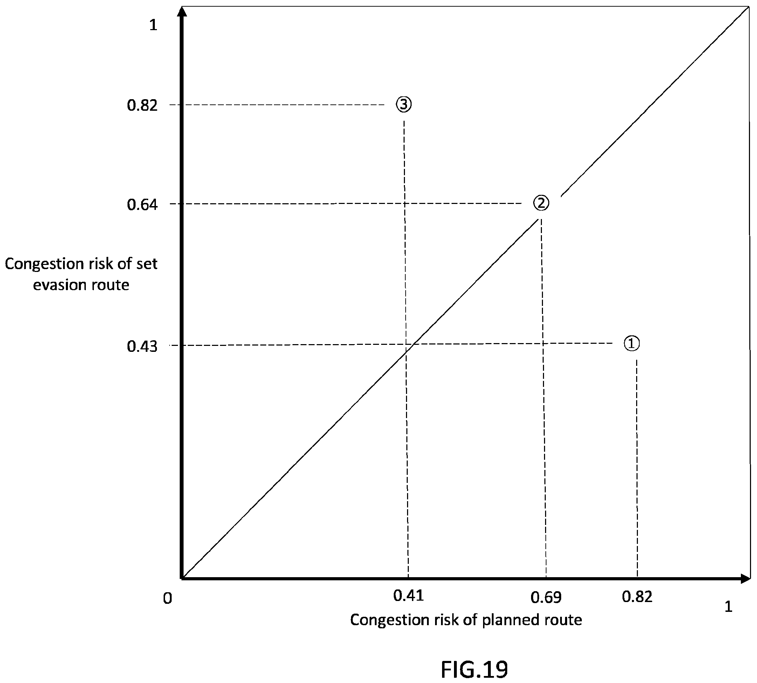

**FIG. 19** is a diagram showing the relationship between the congestion risk when the vessel **200** navigates on the planned route and the congestion risk when the vessel **200** navigates on the evasion route, and similarly to the maximum collision risk, the relationship is divided into 3 relationships of 1-3 according to the size of the values of both.

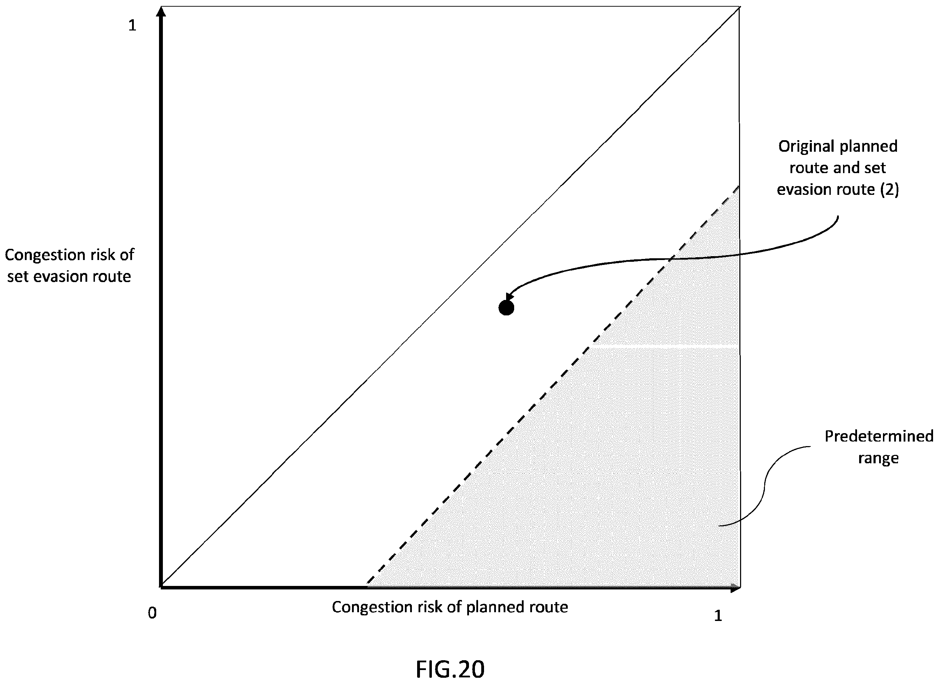

**FIG. 20** divides the region in the above relationship into a predetermined base the second large range in which the degree of improvement of the congestion risk of the evasion route relative to the planned route is large, *i.e.,* the numerical value of the risk is significantly reduced, a region in which the degree of improvement is not expected to be significant but the risk value is reduced (both in the lower right half), and a region in the upper left corner in which the degree of improvement is not expected but rather the risk value is increased.

For example, when the maximum collision risk of the evasion route is in the predetermined base the second large range in **FIG. 12** and the congestion risk is also located in the predetermined base the second large range shown in the lower right corner of **FIG. 20,** it may be determined that the navigation route changes to the evasion route regardless of the distance.

On the other hand, when the maximum collision risk of the evasion route is not within the predetermined range and a large improvement in the collision risk is not expected, it may be possible to determine the necessity of the navigation route change by referring to the difference in the distance. Specifically, although the maximum collision risk or the congestion risk of the evasion route is improved, it is possible to set a route plan according to the type in which a navigation route change to the evasion route is performed if the evasion route is capable of a so-called short return, which is possible to return to the planned route early, although no significant improvement is expected.

Table 1 shows an example of the classification of the types for three evaluation factors maximum collision risk, the congestion risk, and the difference between the distance of the planned route and the evasion route. In this way, the navigation planning system of the present invention can flexibly set the route by appropriately evaluating the collision risk for the evasion route and considering the distance of the evasion route.

Table 1

| Type | Maximum collision risk | Congestion risk | Difference of distance* | Navigation route change signal |
|------|------------------------|-----------------|-------------------------|--------------------------------|
| - | Risk of evasion route is greater than that of planned route | - | - | No output signal (route cannot be changed) |

(continued)

| Type | Maximum collision risk | Congestion risk | Difference of distance* | Navigation route change signal |
|---|---|---|---|---|
| - | Risk of evasion route is smaller and outside the predetermined range | Risk of evasion route is greater than that of planned route | - | No output signal (route cannot be changed) |
| - | | Risk of evasion route is smaller and within the predetermined range | Increase in the distance when changing to the evasion route is more than the predetermined range | No output signal (route cannot be changed) |
| Short return | | Risk of evasion route is smaller and outside the predetermined range | Increase in distance when switching to evasion route is within prescribed range | Signal output as short return evasion route (short evasion route can be changed) |
| Focus on risk evasion | | Risk of evasion route is smaller and outside the predetermined range | - | Signal output regardless of distance of evasion route (route can be changed) |
| Focus on risk evasion | Risk of evasion route is smaller and within the predetermined range | - | - | Signal output regardless of distance of evasion route (route can be changed) |

As shown in Table 1, * difference between the distance between the evasion starting point and the return point on the planned route and the distance between the evasion starting point and the return point on the evasion route

Therefore, the navigation planning system **100** of the present invention enables the vessel operator, that is, the operator who operates the vessel, to further safely navigate the vessel **200** by avoiding collision with a plurality of surrounding obstacles such as the other vessels, terrain, etc., in the planned route (the planned route **202** or the evasion route **212**) displayed on the screen of the display unit **6** and the evasion route (the evasion route **212** or the other evasion route) generated.

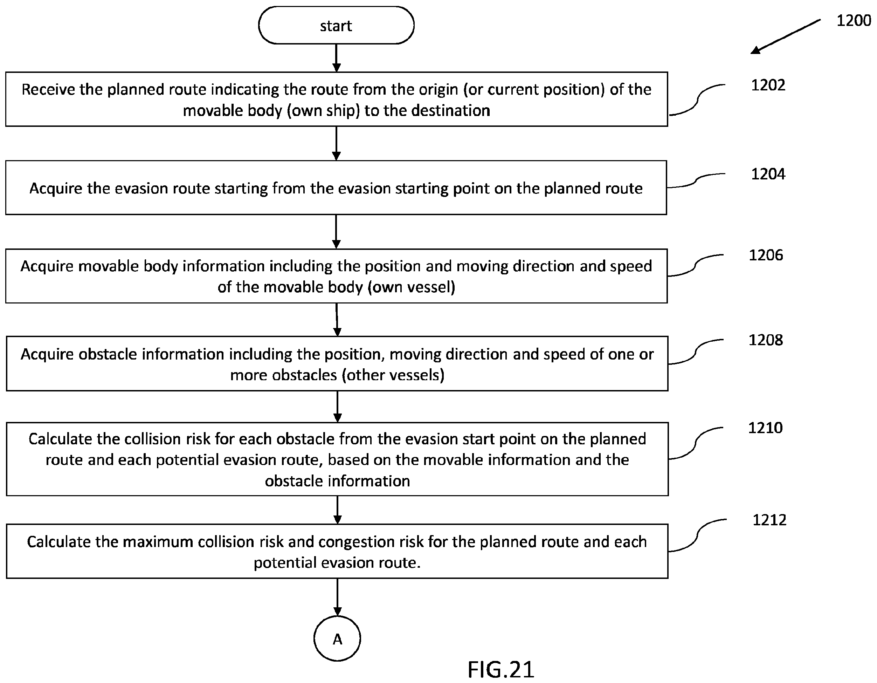

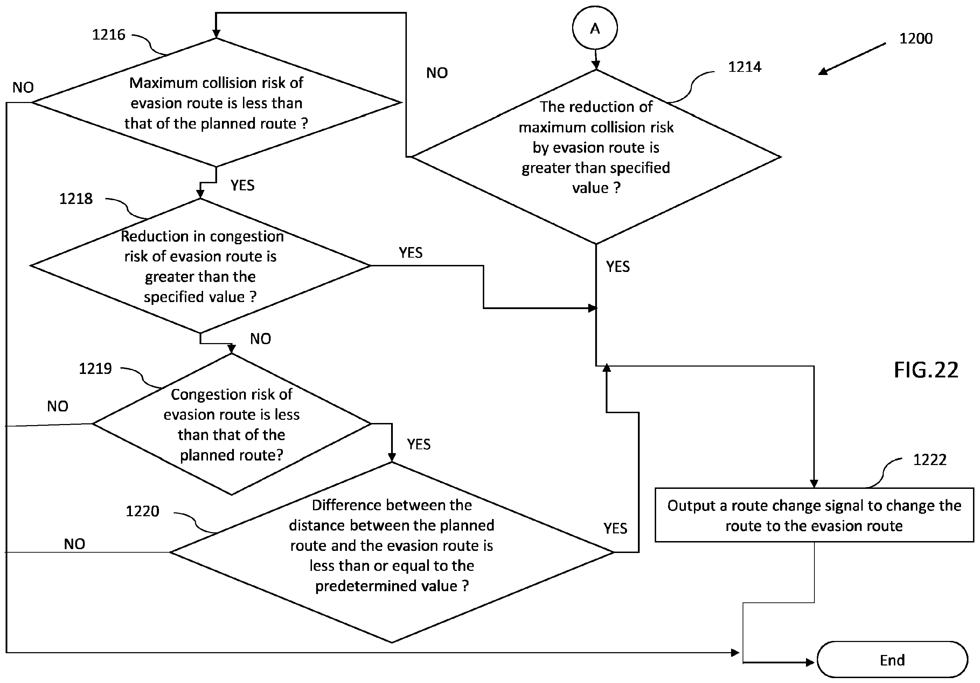

Further, the navigation planning method based on the configuration of the route plan described so far will be described with reference to **FIGs. 21** and **22.**

As shown in **FIG. 21,** at step **1202,** the planned route indicating the route from the starting point (*i.e.,* current location) of the movable body (own vessel) to the destination point is set or received from outside. Further, at step **1204,** the evasion starting point on the planned route of the movable body (own vessel) and the evasion route starting from the starting point are set or received from the outside.

At step **1206,** the movable body information including the position, the moving direction, and speed of the movable body **200** is acquired. At step 1208, the obstacle information including the position, the moving direction, and the speed of one or more of the obstacles (*i.e.,* the other vessels) is acquired.

At step **1210,** the collision risk for each of the obstacles (*i.e.,* the other vessels) is calculated for each of the planned route and the evasion route based on the movable body information and the obstacle information. At step **1212,** the maximum collision risk of the planned route and the maximum collision risk of the evasion route are calculated.

As shown in **FIG. 22,** at step **1214,** the maximum collision risk of the evasion route is compared with the maximum collision risk of the planned route to determine whether the collision risk of the evasion route is significantly improved with respect to the planned route, that is, whether the maximum collision risk is reduced more than prescribed, and the degree of improvement is determined. When it is improved, the process proceeds to step **1222** and outputs a route switching signal *i.e.,* a navigation route change signal, for changing the route to the evasion route. Further, the route plan of the own vessel may be indicated by the switching signal, or direct navigation control such as steering control may be performed by the navigation route change signal. In one embodiment, the navigation route change signal is generated when the maximum collision risk of the evasion route is less than the maximum collision risk of the planned route.

On the other hand, at step **1216,** when the maximum collision risk of the evasion route is greater than the maximum collision risk of the planned route, and no reduction in the collision risk is achieved. Therefore, the evasion route is not adopted and terminated.

When the maximum the collision risk of the evasion route is equal to or less than the maximum the collision risk of the planned route, the congestion risk of the evasion route is compared with the congestion risk of the planned route at step **1218.** When the risk is significantly reduced, that is, within a predetermined reference area, a navigation route change signal is output to change the route to the evasion route.

At step **1219,** when the congestion risk of evasion route is less than that of the planned route, it goes to step **1220.** When the congestion risk is not reduced by changing to the evacuation route, it skips to the end without outputting the navigation route change signal

Even when there is no significant improvement in the congestion risk, at step 1220, the distance between the planned route and the evasion route is compared, a difference or a distance ratio is calculated, and when it is within a predetermined range, a navigation route change signal for changing the route to the evasion route is output. In one embodiment, the difference between an evasion route distance and a planned route distance is determined, or the distance ratio between the evasion route distance and the planned route distance is determined. The navigation route change signal is outputted when the difference or the distance ratio is equal to or less than a predetermined value.

Although the above is a description of embodiments of the navigation planning system and the navigation planning method of the present invention, various exemplary logical blocks and parts described in connection with the embodiments of the invention shown herein may be implemented or executed by a machine such as a processor.

The processor may be a microprocessor, a controller, a microcontroller, a state machine, or a combination thereof. The processor may include an electrical circuit configured to process executable instructions of the computer. In another embodiment, the processor may include an application-specific integrated circuit (ASIC), a field programmable gate array (FPGA), or other programmable device that performs logical operations without processing executable instructions of the computer.

The processor may also be implemented as a combination of computing devices, for example, a combination of a digital signal processor (DSP) and a microprocessor, a plurality of microprocessors, one or more microprocessors combined with a DSP core, or other such configuration.

Although mainly digital technologies are discussed here, the processor may include mainly analog components. For example, some or all of the signal processing algorithms described herein may be implemented by analog circuits or mixed analog and digital circuits.

The computing environment may include any type of computer system including, but not limited to, a microprocessor, mainframe computer, digital signal processor, portable computing device, device controller, or computer system based on a computing engine within the device.

Description of Code

1: navigation planning system
2: navigation planning unit
3: Global Navigation Satellite System (GNSS) receiver
4: a plurality of sensors
5: navigation control unit
6: display unit
7: evasion route setting module
11: navigation planning route acquiring module
12: movable body information acquiring module
13: obstacle information acquiring module
14: potential evasion route generator
15: collision risk calculator
16: maximum collision risk comparator
17: risk evaluator
18: distance calculator
19: congestion risk calculator
20: congestion risk comparator
200: movable body (own vessel)
202: planned route
204, 206, 902, 904: obstacle
212: evasion route
302, 304, 306, 308, 310, 312: congestion risk obstacle
1102: potential evasion route
WP1: evasion starting point (from planned route to evasion route)

WP4: return point (from evasion route to planned route)

**Claims**

1. A navigation planning system (100), comprising:

    a navigation planning route acquiring module (11) configured to acquire a planned route for a movable body on a water;
    a movable body information acquiring module (12) configured to acquire movable body information including a position, a moving direction, and a speed of the movable body;
    an obstacle information acquiring module (13) configured to acquire obstacle information including a position, a moving direction, and a speed of an obstacle located in a surrounding area of the movable body;
    an evasion route setting module (7) configured to set an evasion route, different from the planned route, comprising a starting point located on the planned route;
    a collision risk calculator (15) configured to calculate a collision risk indicating a risk level of collision between the movable body and the obstacle based on the movable body information and obstacle information; and
    **characterized by** further comprising
    a risk evaluator (17) configured to:

    obtain a maximum evasion route collision risk when the movable body travels on the evasion route, and a maximum planned route collision risk when the movable body travels on the planned route, calculated by the collision risk calculator respectively;
    compare the maximum evasion route collision risk with the maximum planned route collision risk; and
    output a navigation route change signal indicating that the movable body change the planned route to the evasion route when the maximum evasion route collision risk is less than the maximum planned route collision risk.

2. The navigation planning system (100) according to claim 1, wherein
    the evasion route setting module (7) further configured to set the evasion route different from the planned route for a part of or entire unnavigated route of the planned route when the risk evaluator (17) determines a necessity of the evasion route.

3. The navigation planning system (100) according to claim 2, wherein:

    the evasion route setting module (7) further includes:
    a potential evasion route generator (14) configured to generate a plurality of potential evasion routes different from the planned route between an evasion starting point and a return point on an unnavigated route; and
    the risk evaluator (17) is further configured to select the evasion route among the plurality of potential evasion routes.

4. The navigation planning system (100) according to claim 3, wherein:

    the collision risk calculator (15) is configured to calculate the maximum evasion route collision risk when the movable body travel along the evasion route from the evasion starting point to the return point; and
    the risk evaluator (17) is further configured to select the potential evasion route, as the evasion route, having the maximum evasion route collision risk minimum among the plurality of potential evasion routes.

5. The navigation planning system (100) according to claim 3 or 4, further comprising:

    a distance calculator (18) configured to calculate a planned route distance travelled by the movable body for a predetermined time on the planned route and an evasion route distance travelled by the movable body for a predetermined time on the evasion route respectively; and
    the risk evaluator (17) further configured to determine whether to output the navigation route change signal based on the maximum evasion route collision risk and the maximum planned route collision risk, and the planned route distance and the evasion route distance.

6. The navigation planning system (100) according to claim 3 or 4, wherein:

the distance calculator (18) further configured to calculate the planned route distance between the starting point and the return point on the planned route and the evasion route distance between the starting point and the return point respectively; and

the risk evaluator (17) further configured to determine whether to output the navigation route change signal based on the maximum evasion route collision risk and the maximum planned route collision risk, and the evasion route distance and the planned route distance.

7.  The navigation planning system (100) according to claim 5 or 6, wherein:
    the risk evaluator (17) further configured to output the navigation route change signal when one of a difference between the evasion route distance and the planned route distance is within a predetermined value, and a distance ratio between the evasion route distance and the planned route distance is equal to or less than a predetermined value.

8.  The navigation planning system (100) according to claim 5 or 6, wherein:
    the risk evaluator (17) further configured to:

    output the navigation route change signal when a difference between the maximum planned route collision risk and the maximum evasion route collision risk is greater than a predetermined value; and
    determine whether to output the navigation route change signal based on the difference between the evasion route distance and the planned route distance when the difference between the maximum planned route collision risk and the maximum evasion route collision risk is within the predetermined value.

9.  The navigation planning system (100) according to any of claim 1 to 7, further comprising:

    a congestion risk calculator (19) configured to calculate a congestion risk indicating a degree of approaching a plurality of obstacles simultaneously based on each of the collision risk between the movable body and the obstacle; and
    the risk evaluator (17) further configured to:

    obtain a maximum evasion route congestion risk when the movable body travels on the evasion route and a maximum planned route congestion risk when the movable body travels on the planned route, calculated by the congestion risk calculator respectively;
    compare the maximum evasion route congestion risk with the maximum planned route congestion risk; and output the navigation route change signal when the maximum evasion route collision risk is less than the maximum planned route collision risk, and the maximum evasion route congestion risk is less than the maximum planned route congestion risk.

10. The navigation planning system (100) according to claim 9, wherein:
    the congestion risk calculator (19) further configured to calculate the congestion risk of the planned route based on a logical sum of a plurality of collision risks.

11. The navigation planning system (100) according to claim 9 or 10, wherein:
    the congestion risk calculator (19)further configured to calculate the congestion risk based on the collision risks including the maximum collision risk among the plurality of collision risks.

12. The navigation planning system according to claim 9 or 10, wherein:
    the congestion risk calculator (19) further configured to calculate the congestion risk based on the collision risks including a second large collision risk among the plurality of collision risks excluding the maximum collision risk.

13. A navigation planning method, comprising:

    acquiring a planned route for a movable body on a water;
    acquiring movable body information including a position, a moving direction, and a speed of the movable body;
    acquiring obstacle information including a position, a moving direction, and a speed of an obstacle located in a surrounding area of the movable body;
    acquiring an evasion route, different from the planned route, comprising a starting point located on the planned route;
    calculating a collision risk indicating a risk level of collision between the movable body and the obstacle based on the movable body information and obstacle information;
**characterized by** further comprising:

obtaining a maximum evasion route collision risk when the movable body travels on the evasion route and a maximum planned route collision risk when the movable body travels on the planned route, calculated by the collision risk calculator respectively;
comparing the maximum evasion route collision risk with the maximum planned route collision risk; and outputting a navigation route change signal indicating that the movable body change the planned route to the evasion route when the maximum evasion route collision risk is less than the maximum planned route collision risk.

14. The navigation planning method according to claim 13, further comprising:

generating a plurality of potential evasion routes different from the planned route between an evasion starting point and a return point on an unnavigated route;
selecting the evasion route among the potential evasion routes;
calculating the maximum collision risk when the movable body travel along the evasion route from the evasion starting point to the return point; and
selecting the potential evasion route, as the evasion route, having the maximum collision risk minimum among the plurality of potential evasion routes.

15. The navigation planning method according to claim 14, further comprising:

calculating a congestion risk indicating a degree of approaching a plurality of obstacles simultaneously based on each of the collision risk between the movable body and the obstacle;
obtaining a maximum evasion route congestion risk when the movable body travels on the evasion route and a maximum planned route congestion risk when the movable body travels on the planned route, calculated by the congestion risk calculator respectively;
comparing the maximum evasion route congestion risk with the maximum planned route congestion risk; and outputting the navigation route change signal when the maximum evasion route collision risk is less than the maximum planned route collision risk, and the maximum evasion route congestion risk is less than the maximum planned route congestion risk.

**Patentansprüche**

1. Navigationsplanungssystem (100), aufweisend:

ein Navigationsplanungsroutenerfassungsmodul (11), das konfiguriert ist, eine geplante Route für einen beweglichen Körper auf einem Wasser zu erfassen;
ein Bewegliches-Körper-Informationserfassungsmodul (12), das konfiguriert ist, Bewegliche-Körper-Informationen einschließlich einer Position, einer Bewegungsrichtung und einer Geschwindigkeit des beweglichen Körpers zu erfassen;
ein Hindernisinformationserfassungsmodul (13), das konfiguriert ist, Hindernisinformationen einschließlich einer Position, einer Bewegungsrichtung und einer Geschwindigkeit eines Hindernisses, das sich in einem Umgebungsbereich des beweglichen Körpers befindet, zu erfassen;
ein Ausweichrouteneinstellmodul (7), das konfiguriert ist, eine Ausweichroute, die sich von der geplanten Route unterscheidet, einzustellen, aufweisend einen Startpunkt, der sich auf der geplanten Route befindet;
einen Kollisionsrisikorechner (15), der konfiguriert ist, ein Kollisionsrisiko zu berechnen, das ein Risikoniveau einer Kollision zwischen dem beweglichen Körper und dem Hindernis basierend auf den Bewegliche-Körper-Informationen und Hindernisinformationen angibt; und **dadurch gekennzeichnet, dass** es ferner aufweist einen Risikoauswerter (17), der konfiguriert ist:

ein maximales Ausweichroutenkollisionsrisiko zu erhalten, wenn der bewegliche Körper auf der Ausweichroute fährt, und ein maximales geplantes Routenkollisionsrisiko, wenn der bewegliche Körper auf der geplanten Route fährt, jeweils berechnet durch den Kollisionsrisikorechner;
das maximale Ausweichroutenkollisionsrisiko mit dem maximalen geplanten Routenkollisionsrisiko zu vergleichen; und

ein Navigationsroutenänderungssignal auszugeben, das angibt, dass der bewegliche Körper die geplante Route zu der Ausweichroute ändert, wenn das maximale Ausweichroutenkollisionsrisiko geringer als das maximale geplante Routenkollisionsrisiko ist.

2. Navigationsplanungssystem (100) nach Anspruch 1, wobei
das Ausweichrouteneinstellmodul (7) ferner konfiguriert ist, die Ausweichroute, die sich von der geplanten Route unterscheidet, für einen Teil oder die gesamte nicht navigierte Route der geplanten Route einzustellen, wenn der Risikoauswerter (17) eine Notwendigkeit der Ausweichroute bestimmt.

3. Navigationsplanungssystem (100) nach Anspruch 2, wobei:

das Ausweichrouteneinstellmodul (7) ferner umfasst:
einen potentiellen Ausweichroutengenerator (14), der konfiguriert ist, eine Vielzahl von potentiellen Ausweichrouten, die sich von der geplanten Route unterscheiden, zwischen einem Ausweichstartpunkt und einem Rückkehrpunkt auf einer nicht navigierten Route zu erzeugen; und
der Risikoauswerter (17) ferner konfiguriert ist, die Ausweichroute aus der Vielzahl von potentiellen Ausweichrouten auszuwählen.

4. Navigationsplanungssystem (100) nach Anspruch 3, wobei:

der Kollisionsrisikorechner (15) konfiguriert ist, das maximale Ausweichroutenkollisionsrisiko zu berechnen, wenn der bewegliche Körper entlang der Ausweichroute von dem Ausweichstartpunkt zu dem Rückkehrpunkt fährt; und
der Risikoauswerter (17) ferner konfiguriert ist, die potentielle Ausweichroute als die Ausweichroute auszuwählen, die das maximale Ausweichrouten-Kollisionsrisikominimum unter der Vielzahl von potentiellen Ausweichrouten hat.

5. Navigationsplanungssystem (100) nach Anspruch 3 oder 4, ferner aufweisend:

einen Entfernungsrechner (18), der konfiguriert ist, eine geplante Routenentfernung, die von dem beweglichen Körper für eine vorbestimmte Zeit auf der geplanten Route zurückgelegt wird, und eine Ausweichroutenentfernung, die von dem beweglichen Körper für eine vorbestimmte Zeit auf der Ausweichroute zurückgelegt wird, jeweils zu berechnen; und
der Risikoauswerter (17) ferner konfiguriert ist, basierend auf dem maximalen Ausweichroutenkollisionsrisiko und dem maximalen geplanten Routenkollisionsrisiko und der geplanten Routenentfernung und der Ausweichroutenentfernung zu bestimmen, ob das Navigationsroutenänderungssignal ausgegeben werden soll.

6. Navigationsplanungssystem (100) nach Anspruch 3 oder 4, wobei:

der Entfernungsrechner (18) ferner konfiguriert ist, die geplante Routenentfernung zwischen dem Startpunkt und dem Rückkehrpunkt auf der geplanten Route und die Ausweichroutenentfernung zwischen dem Startpunkt und dem Rückkehrpunkt jeweils zu berechnen; und
der Risikoauswerter (17) ferner konfiguriert ist, basierend auf dem maximalen Ausweichroutenkollisionsrisiko und dem maximalen geplanten Routenkollisionsrisiko und der Ausweichroutenentfernung und der geplanten Routenentfernung zu bestimmen, ob das Navigationsroutenänderungssignal ausgegeben werden soll.

7. Navigationsplanungssystem (100) nach Anspruch 5 oder 6, wobei:
der Risikoauswerter (17) ferner konfiguriert ist, das Navigationsroutenänderungssignal auszugeben, wenn eine von einer Differenz zwischen der Ausweichroutenentfernung und der geplanten Routenentfernung innerhalb eines vorbestimmten Werts liegt und ein Entfernungsverhältnis zwischen der Ausweichroutenentfernung und der geplanten Routenentfernung gleich oder kleiner als ein vorbestimmter Wert ist.

8. Navigationsplanungssystem (100) nach Anspruch 5 oder 6, wobei:
der Risikoauswerter (17) ferner konfiguriert ist:

das Navigationsroutenänderungssignal auszugeben, wenn eine Differenz zwischen dem maximalen geplanten Routenkollisionsrisiko und dem maximalen Ausweichroutenkollisionsrisiko größer als ein vorbestimmter Wert ist; und

basierend auf der Differenz zwischen der Ausweichroutenentfernung und der geplanten Routenentfernung zu bestimmen, ob das Navigationsroutenänderungssignal ausgegeben werden soll, wenn die Differenz zwischen dem maximalen geplanten Routenkollisionsrisiko und dem maximalen Ausweichroutenkollisionsrisiko innerhalb des vorbestimmten Werts liegt.

9. Navigationsplanungssystem (100) nach einem der Ansprüche 1 bis 7, ferner aufweisend:

einen Staurisikorechner (19), der konfiguriert ist, ein Staurisiko zu berechnen, das einen Grad der gleichzeitigen Annäherung einer Vielzahl von Hindernissen basierend auf jedem der Kollisionsrisiken zwischen dem beweglichen Körper und dem Hindernis angibt; und
der Risikoauswerter (17) ferner konfiguriert ist:

ein maximales Ausweichroutenstaurisiko, wenn der bewegliche Körper auf der Ausweichroute fährt, und ein maximales geplantes Routenstaurisiko, wenn der bewegliche Körper auf der geplanten Route fährt, jeweils berechnet durch den Staurisikorechner, zu erhalten;
das maximale Ausweichroutenstaurisiko mit dem maximalen geplanten Routenstaurisiko zu vergleichen; und
das Navigationsroutenänderungssignal auszugeben, wenn das maximale Ausweichroutenkollisionsrisiko geringer als das maximale geplante Routenkollisionsrisiko ist und das maximale Ausweichroutenstaurisiko geringer als das maximale geplante Routenstaurisiko ist.

10. Navigationsplanungssystem (100) nach Anspruch 9, wobei:
der Staurisikorechner (19) ferner konfiguriert ist, das Staurisiko der geplanten Route basierend auf einer logischen Summe einer Vielzahl von Kollisionsrisiken zu berechnen.

11. Navigationsplanungssystem (100) nach Anspruch 9 oder 10, wobei:
der Staurisikorechner (19) ferner konfiguriert ist, das Staurisiko basierend auf den Kollisionsrisiken einschließlich des maximalen Kollisionsrisikos unter der Vielzahl von Kollisionsrisiken zu berechnen.

12. Navigationsplanungssystem nach Anspruch 9 oder 10, wobei:
der Staurisikorechner (19) ferner konfiguriert ist, das Staurisiko basierend auf den Kollisionsrisiken einschließlich eines zweiten großen Kollisionsrisikos unter der Vielzahl von Kollisionsrisiken mit Ausnahme des maximalen Kollisionsrisikos zu berechnen.

13. Navigationsplanungsverfahren, aufweisend:

Erfassen einer geplanten Route für einen beweglichen Körper auf einem Wasser;
Erfassen von Bewegliche-Körper-Informationen einschließlich einer Position, einer Bewegungsrichtung und einer Geschwindigkeit des beweglichen Körpers;
Erfassen von Hindernisinformationen einschließlich einer Position, einer Bewegungsrichtung und einer Geschwindigkeit eines Hindernisses, das sich in einem Umgebungsbereich des beweglichen Körpers befindet;
Erfassen einer Ausweichroute, die sich von der geplanten Route unterscheidet, aufweisend einen Startpunkt, der sich auf der geplanten Route befindet;
Berechnen eines Kollisionsrisikos, das ein Risikoniveau einer Kollision zwischen dem beweglichen Körper und dem Hindernis basierend auf den Bewegliche-Körper-Informationen und Hindernisinformationen angibt;
**dadurch gekennzeichnet, dass** es ferner aufweist:

Erhalten eines maximalen Ausweichroutenkollisionsrisikos, wenn der bewegliche Körper auf der Ausweichroute fährt, und eines maximalen geplanten Routenkollisionsrisikos, wenn der bewegliche Körper auf der geplanten Route fährt, jeweils berechnet durch den Kollisionsrisikorechner;
Vergleichen des maximalen Ausweichroutenkollisionsrisikos mit dem maximalen geplanten Routenkollisionsrisiko; und
Ausgeben eines Navigationsroutenänderungssignals, das angibt, dass der bewegliche Körper die geplante Route zu der Ausweichroute ändert, wenn das maximale Ausweichroutenkollisionsrisiko geringer als das maximale geplante Routenkollisionsrisiko ist.

14. Navigationsplanungsverfahren nach Anspruch 13, ferner aufweisend:

Erzeugen einer Vielzahl von potentiellen Ausweichrouten, die sich von der geplanten Route unterscheiden, zwischen einem Ausweichstartpunkt und einem Rückkehrpunkt auf einer nicht navigierten Route;

Auswählen der Ausweichroute unter den potentiellen Ausweichrouten;

Berechnen des maximalen Kollisionsrisikos, wenn der bewegliche Körper entlang der Ausweichroute von dem Ausweichstartpunkt zu dem Rückkehrpunkt fährt; und

Auswählen der potentiellen Ausweichroute als die Ausweichroute, die das maximale Kollisionsrisikominimum unter der Vielzahl von potentiellen Ausweichrouten hat.

**15.** Navigationsplanungsverfahren nach Anspruch 14, ferner aufweisend:

Berechnen eines Staurisikos, das einen Grad der gleichzeitigen Annäherung einer Vielzahl von Hindernissen basierend auf jedem der Kollisionsrisiken zwischen dem beweglichen Körper und dem Hindernis angibt;

Erhalten eines maximalen Ausweichroutenstaurisikos, wenn der bewegliche Körper auf der Ausweichroute fährt, und eines maximalen geplanten Routenstaurisikos, wenn der bewegliche Körper auf der geplanten Route fährt, jeweils berechnet durch den Staurisikorechner;

Vergleichen des maximalen Ausweichroutenstaurisikos mit dem maximalen geplanten Routenstaurisiko; und

Ausgeben des Navigationsroutenänderungssignals, wenn das maximale Ausweichroutenkollisionsrisiko geringer als das maximale geplante Routenkollisionsrisiko ist und das maximale Ausweichroutenstaurisiko geringer als das maximale geplante Routenstaurisiko ist.

## Revendications

**1.** Système de planification de navigation (100), comprenant :

un module d'acquisition d'itinéraire de planification de navigation (11) configuré pour acquérir un itinéraire planifié pour un corps mobile sur une eau ;

un module d'acquisition d'informations de corps mobile (12) configuré pour acquérir des informations de corps mobile comportant une position, une direction de déplacement et une vitesse du corps mobile ;

un module d'acquisition d'informations d'obstacle (13) configuré pour acquérir des informations d'obstacle comportant une position, une direction de déplacement et une vitesse d'un obstacle situé dans une zone environnante du corps mobile ;

un module d'établissement d'itinéraire d'évitement (7) configuré pour établir un itinéraire d'évitement, différent de l'itinéraire planifié, comprenant un point de départ situé sur l'itinéraire planifié ;

un calculateur de risque de collision (15) configuré pour calculer un risque de collision indiquant un niveau de risque de collision entre le corps mobile et l'obstacle sur la base des informations de corps mobile et des informations d'obstacle ; et **caractérisé en outre en ce qu'**il comprend un évaluateur de risques (17) configuré pour :

obtenir un risque maximal de collision sur l'itinéraire d'évitement lorsque le corps mobile se déplace sur l'itinéraire d'évitement, et un risque maximal de collision sur l'itinéraire planifié lorsque le corps mobile se déplace sur l'itinéraire planifié, calculés respectivement par le calculateur de risque de collision ;

comparer le risque maximal de collision sur l'itinéraire d'évitement avec le risque maximal de collision sur l'itinéraire planifié ; et

délivrer en sortie un signal de changement d'itinéraire de navigation indiquant que le corps mobile passe de l'itinéraire planifié à l'itinéraire d'évitement lorsque le risque maximal de collision sur l'itinéraire d'évitement est inférieur au risque maximal de collision sur l'itinéraire planifié.

**2.** Système de planification de navigation (100) selon la revendication 1, dans lequel le module d'établissement d'itinéraire d'évitement (7) est configuré en outre pour établir l'itinéraire d'évitement différent de l'itinéraire planifié quant à une partie ou la totalité d'itinéraire non navigué de l'itinéraire planifié lorsque l'évaluateur de risques (17) détermine une nécessité de l'itinéraire d'évitement.

**3.** Système de planification de navigation (100) selon la revendication 2, dans lequel : le module d'établissement d'itinéraire d'évitement (7) comporte en outre :

un générateur d'itinéraires d'évitement potentiels (14) configuré pour générer une pluralité d'itinéraires d'évitement potentiels différents de l'itinéraire planifié entre un point de départ d'évitement et un point de retour sur un itinéraire non navigué ; et

l'évaluateur de risques (17) est en outre configuré pour sélectionner l'itinéraire d'évitement parmi la pluralité d'itinéraires d'évitement potentiels.

4. Système de planification de navigation (100) selon la revendication 3, dans lequel :

le calculateur de risque de collision (15) est configuré pour calculer le risque maximal de collision sur l'itinéraire d'évitement lorsque le corps mobile se déplace le long de l'itinéraire d'évitement du point de départ d'évitement au point de retour ; et

l'évaluateur de risques (17) est en outre configuré pour sélectionner l'itinéraire d'évitement potentiel, en tant qu'itinéraire d'évitement, ayant le plus petit risque maximal de collision sur l'itinéraire d'évitement parmi la pluralité d'itinéraires d'évitement potentiels.

5. Système de planification de navigation (100) selon la revendication 3 ou 4, comprenant en outre :

un calculateur de distances (18) configuré pour calculer respectivement une distance d'itinéraire planifié parcourue par le corps mobile pendant un temps prédéterminé sur l'itinéraire planifié et une distance d'itinéraire d'évitement parcourue par le corps mobile pendant un temps prédéterminé sur l'itinéraire d'évitement ; et

l'évaluateur de risques (17) est configuré en outre pour déterminer s'il faut délivrer en sortie le signal de changement d'itinéraire de navigation sur la base du risque maximal de collision sur l'itinéraire d'évitement et du risque maximal de collision sur l'itinéraire planifié, et de la distance d'itinéraire planifié et de la distance d'itinéraire d'évitement.

6. Système de planification de navigation (100) selon la revendication 3 ou 4, dans lequel :

le calculateur de distances (18) est configuré en outre pour calculer respectivement la distance d'itinéraire planifié entre le point de départ et le point de retour sur l'itinéraire planifié et la distance d'itinéraire d'évitement entre le point de départ et le point de retour ; et

l'évaluateur de risques (17) est configuré en outre pour déterminer s'il faut délivrer en sortie le signal de changement d'itinéraire de navigation sur la base du risque maximal de collision sur l'itinéraire d'évitement et du risque maximal de collision sur l'itinéraire planifié, et de la distance d'itinéraire d'évitement et de la distance d'itinéraire planifié.

7. Système de planification de navigation (100) selon la revendication 5 ou 6, dans lequel :
l'évaluateur de risques (17) est configuré en outre pour délivrer en sortie le signal de changement d'itinéraire de navigation lorsqu'une différence entre la distance d'itinéraire d'évitement et la distance d'itinéraire planifié est dans une valeur prédéterminée, ou lorsqu'un rapport de distance entre la distance d'itinéraire d'évitement et la distance d'itinéraire planifié est égal ou inférieur à une valeur prédéterminée.

8. Système de planification de navigation (100) selon la revendication 5 ou 6, dans lequel :
l'évaluateur de risques (17) est configuré en outre pour :

délivrer en sortie le signal de changement d'itinéraire de navigation lorsqu'une différence entre le risque maximal de collision sur l'itinéraire planifié et le risque maximal de collision sur l'itinéraire d'évitement est supérieure à une valeur prédéterminée ; et

déterminer s'il faut délivrer en sortie le signal de changement d'itinéraire de navigation sur la base de la différence entre la distance d'itinéraire d'évitement et la distance d'itinéraire planifié lorsque la différence entre le risque maximal de collision sur l'itinéraire planifié et le risque maximal de collision sur l'itinéraire d'évitement est dans la valeur prédéterminée.

9. Système de planification de navigation (100) selon l'une des revendications 1 à 7, comprenant en outre :

un calculateur de risque d'encombrement (19) configuré pour calculer un risque d'encombrement indiquant un degré d'approche d'une pluralité d'obstacles simultanément sur la base de chacun du risque de collision entre le corps mobile et l'obstacle ; et

l'évaluateur de risques (17) est configuré en outre pour :

obtenir un risque maximal d'encombrement sur l'itinéraire d'évitement lorsque le corps mobile se déplace sur l'itinéraire d'évitement et un risque maximal d'encombrement sur l'itinéraire planifié lorsque le corps mobile se déplace sur l'itinéraire planifié, calculés respectivement par le calculateur de risque d'encombrement ; comparer le risque maximal d'encombrement sur l'itinéraire d'évitement avec le risque maximal d'encombrement sur l'itinéraire planifié ; et

délivrer en sortie le signal de changement d'itinéraire de navigation lorsque le risque maximal de collision sur l'itinéraire d'évitement est inférieur au risque maximal de collision sur l'itinéraire planifié, et lorsque le risque maximal d'encombrement sur l'itinéraire d'évitement est inférieur au risque maximal d'encombrement sur l'itinéraire planifié.

**10.** Système de planification de navigation (100) selon la revendication 9, dans lequel :
le calculateur de risque d'encombrement (19) est configuré en outre pour calculer le risque d'encombrement de l'itinéraire planifié sur la base d'une somme logique d'une pluralité de risques de collision.

**11.** Système de planification de navigation (100) selon la revendication 9 ou 10, dans lequel :
le calculateur de risque d'encombrement (19) est configuré en outre pour calculer le risque d'encombrement sur la base des risques de collision comportant le risque de collision maximal parmi la pluralité de risques de collision.

**12.** Système de planification de navigation selon la revendication 9 ou 10, dans lequel :
le calculateur de risque d'encombrement (19) est configuré en outre pour calculer le risque d'encombrement sur la base des risques de collision comportant un second risque de collision important parmi la pluralité de risques de collision à l'exclusion du risque de collision maximal.

**13.** Procédé de planification de navigation, comprenant :

l'acquisition d'un itinéraire planifié pour un corps mobile sur une eau ;
l'acquisition d'informations de corps mobile comportant une position, une direction de déplacement et une vitesse du corps mobile ;
l'acquisition d'informations d'obstacle comportant une position, une direction de déplacement et une vitesse d'un obstacle situé dans une zone environnante du corps mobile ;
l'acquisition d'un itinéraire d'évitement, différent de l'itinéraire planifié, comprenant un point de départ situé sur l'itinéraire planifié ;
le calcul d'un risque de collision indiquant un niveau de risque de collision entre le corps mobile et l'obstacle sur la base des informations de corps mobile et des informations d'obstacle ;
**caractérisé en ce qu'**il comprend en outre :

l'obtention d'un risque maximal de collision sur l'itinéraire d'évitement lorsque le corps mobile se déplace sur l'itinéraire d'évitement et un risque maximal de collision sur l'itinéraire planifié lorsque le corps mobile se déplace sur l'itinéraire planifié, calculés respectivement par le calculateur de risque de collision ;
la comparaison du risque maximal de collision sur l'itinéraire d'évitement avec le risque maximal de collision sur l'itinéraire planifié ; et
la sortie d'un signal de changement d'itinéraire de navigation indiquant que le corps mobile passe de l'itinéraire planifié à l'itinéraire d'évitement lorsque le risque maximal de collision sur l'itinéraire d'évitement est inférieur au risque maximal de collision sur l'itinéraire planifié.

**14.** Procédé de planification de navigation selon la revendication 13, comprenant en outre :

la génération d'une pluralité d'itinéraires d'évitement potentiels différents de l'itinéraire planifié entre un point de départ d'évitement et un point de retour sur un itinéraire non navigué ;
la sélection de l'itinéraire d'évitement parmi les itinéraires d'évitement potentiels ;
le calcul du risque de collision maximal lorsque le corps mobile se déplace le long de l'itinéraire d'évitement du point de départ d'évitement au point de retour ; et
la sélection de l'itinéraire d'évitement potentiel, en tant qu'itinéraire d'évitement, ayant le plus petit risque de collision maximal parmi la pluralité d'itinéraires d'évitement potentiels.

**15.** Procédé de planification de navigation selon la revendication 14, comprenant en outre :

le calcul d'un risque d'encombrement indiquant un degré d'approche d'une pluralité d'obstacles simultanément sur la base de chacun du risque de collision entre le corps mobile et l'obstacle ;

l'obtention d'un risque maximal d'encombrement sur l'itinéraire d'évitement lorsque le corps mobile se déplace sur l'itinéraire d'évitement et un risque maximal d'encombrement sur l'itinéraire planifié lorsque le corps mobile se déplace sur l'itinéraire planifié, calculés respectivement par le calculateur de risque d'encombrement ;

la comparaison du risque maximal d'encombrement sur l'itinéraire d'évitement avec le risque maximal d'encombrement sur l'itinéraire planifié ; et

la sortie du signal de changement d'itinéraire de navigation lorsque le risque maximal de collision sur l'itinéraire d'évitement est inférieur au risque maximal de collision sur l'itinéraire planifié, et lorsque le risque maximal d'encombrement sur l'itinéraire d'évitement est inférieur au risque maximal d'encombrement sur l'itinéraire planifié.

100

1

Processing Circuitry

13 Obstacle information acquiring module

12 Movable body information acquiring module

11 Navigation planning route acquiring module

14 Potential evasion route generator

7 Evasion route setting module

15 Collision risk calculator

16 Maximum collision risk comparator

17 Risk evaluator

5 Navigation control unit

6 Display unit

4 Plurality of sensors

3 GNSS receiver

2 Navigation planning unit

FIG.1

FIG.2

FIG.3

FIG.4

FIG.5

FIG.6

FIG.7

FIG.8

NM

Closest distance to obstacle (another vessel) 204 when navigating on
evasion route

Closest distance to obstacle (another vessel) 206 when
navigating on planned route

Distance
to each
obstacle

Closest distance to obstacle (another vessel) 204 when navigating on
planned route

Closest distance to obstacle (another
vessel) 206 when navigating on
evasion route

0

Evasion starting point

navigation distance

FIG.9

EP 4 560 263 B1

FIG.10

FIG.11

EP 4 560 263 B1

FIG.12

FIG.13

FIG.14

EP 4 560 263 B1

NM

Total route length of set
evasion route between
starting point and return
point

Original planned
route and set
evasion route (2)

7.8

0

7.2

NM

Distance on the planned route between starting point and return point

FIG.15

EP 4 560 263 B1

FIG.16

EP 4 560 263 B1

FIG.17

FIG.18

FIG.19

FIG.20

```
                        ┌──────────────┐
                        │    start     │                          ╱ 1200
                        └──────────────┘                         ╱
                               │
                               ▼
┌──────────────────────────────────────────────────────────────┐
│ Receive the planned route indicating the route from the origin │      1202
│ (or current position) of the movable body (own ship) to the    │
│ destination                                                     │
└──────────────────────────────────────────────────────────────┘
                               │
                               ▼
┌──────────────────────────────────────────────────────────────┐
│ Acquire the evasion route starting from the evasion starting   │      1204
│ point on the planned route                                      │
└──────────────────────────────────────────────────────────────┘
                               │
                               ▼
┌──────────────────────────────────────────────────────────────┐
│ Acquire movable body information including the position and     │      1206
│ moving direction and speed of the movable body (own vessel)     │
└──────────────────────────────────────────────────────────────┘
                               │
                               ▼
┌──────────────────────────────────────────────────────────────┐
│ Acquire obstacle information including the position, moving     │      1208
│ direction and speed of one or more obstacles (other vessels)    │
└──────────────────────────────────────────────────────────────┘
                               │
                               ▼
┌──────────────────────────────────────────────────────────────┐
│ Calculate the collision risk for each obstacle from the evasion │      1210
│ start point on the planned route and each potential evasion     │
│ route, based on the movable information and the obstacle        │
│ information                                                      │
└──────────────────────────────────────────────────────────────┘
                               │
                               ▼
┌──────────────────────────────────────────────────────────────┐
│ Calculate the maximum collision risk and congestion risk for    │      1212
│ the planned route and each potential evasion route.             │
└──────────────────────────────────────────────────────────────┘
                               │
                               ▼
                            ( A )
```

FIG.21

FIG.22

EP 4 560 263 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200310434 A
- WO 2019121237 A1

- EP 4290496 A1